# EUROPEAN PATENT SPECIFICATION

(11) **EP 4 227 770 B1**
(45) Date of publication and mention of the grant of the patent: **03.06.2026**
(21) Application number: 20962423.8
(22) Date of filing: 18.11.2020
(51) Int. Cl.: G06F 3/01, G06F 3/0338

(54) **INFORMATION PROCESSING SYSTEM, CONTROLLER, INFORMATION PROCESSING METHOD, AND INFORMATION PROCESSING PROGRAM**
INFORMATIONSVERARBEITUNGSSYSTEM, STEUERUNG, INFORMATIONSVERARBEITUNGSVERFAHREN UND INFORMATIONSVERARBEITUNGSPROGRAMM
SYSTÈME DE TRAITEMENT D'INFORMATIONS, DISPOSITIF DE COMMANDE, PROCÉDÉ DE TRAITEMENT D'INFORMATIONS ET PROGRAMME DE TRAITEMENT D'INFORMATIONS

(43) Date of publication of application: 16.08.2023
(73) Proprietor: Nintendo Co., Ltd., Kyoto-shi, Kyoto 601-8501 (JP)
(72) Inventor: AOKI, Takafumi, Kyoto-shi, Kyoto 601-8501 (JP); OKAMURA, Takanori, Kyoto-shi, Kyoto 601-8501 (JP)
(74) Representative: Lorenz Seidler Gossel Part. mbB
(86) International application number: PCT/JP2020/043072
(87) International publication number: WO 2022/107259

(56) References cited:
- JP-A- 2003 316 514
- JP-A- 2016 007 345
- JP-A- 2017 111 464
- JP-A- 2019 153 113
- JP-A- 2020 035 376
- US-A1- 2020 272 193

## Description

### TECHNICAL FIELD

The present invention relates to an information processing system including at least a controller having an operation element such as a button or a stick, a controller, an information processing method, and an information processing program.

### BACKGROUND ART

Conventionally, there has been known a controller including an operation element such as a button or a stick. US 2020/272193 A1 discloses an input device, such as a joystick, including a lever as an operating device, a magnetorheological brake device, and a controller for activating the brake device. One application of the device described in the document is the simulation of different detent position for an automatic transmission.

### CITATION LIST

### [PATENT LITERATURE]

[PTL 1] Japanese Laid-Open Patent Publication No. 2017-004523

In such a controller, there has been room for improvement in terms of enhancement of a feeling and an information amount that a user receives when operating an operation element.

Accordingly, an object of the present invention is to provide an information processing system, a controller, an information processing method, and an information processing program, that can enhance a feeling and an information amount that a user receives when operating an operation element.

The above object is achieved by an information processing system including the features of claim 1, a controller according to claim 9, an information processing method according to claim 10, and a information processing program according to claim 11.

One configuration example is an information processing system including: an information processing apparatus configured to execute an application; and a controller including a stick configured to be displaced from an initial position by a user's operation, a restoring force imparting section configured to apply a restoring force for returning a position of the displaced stick to the initial position, a resistance section using a magnetorheological fluid whose viscosity changes in accordance with an intensity of a magnetic field and which serves as a resistance when the stick is displaced from the initial position and to the initial position, and a magnetic field generation section configured to provide the magnetic field to the magnetorheological fluid; and a circuit configured to control the magnetic field generation section and to detect a displacement direction of the stick. When the stick is displaced from a left end to a right end of a movable range of the stick, the circuit is configured to change the intensity of the magnetic field such that, when a displacement direction of the stick is a direction of approaching the initial position, the viscosity is greater than when the displacement direction is a direction of moving away from the initial position.

According to the above configuration example, in a case where a magnetorheological fluid is used for a stick having a mechanism for autonomously returning to the initial position, it is possible to control a resistance feeling in consideration of the restoring force to the initial position. In general, how the restoring force is exerted relative to the displacement direction of the stick differs depending on whether the displacement direction of the stick is a direction of returning to the initial position or a direction of moving away from the initial position. Therefore, in a case where control as in the above configuration example is not performed, when the user performs an operation of displacing the stick from the left end to the right end, for example, there are variations in a resistance feeling given to the user's fingers during the operation, so that the user might receive a strange feeling on the operation. In this regard, with the above configuration, control in consideration of the restoring force is performed, whereby variations in the resistance feeling can be suppressed.

In another configuration example, the circuit may be configured to change the viscosity of the magnetorheological fluid by controlling an amplitude, a frequency, and an application time of current to be applied to the magnetic field generation section. Further, when the displacement direction is a direction of approaching the initial position, the circuit may make the amplitude or the application time greater than when the displacement direction is a direction of moving away from the initial position, to control the viscosity so as to increase.

In a case where the displacement direction of the stick is a direction of approaching the initial position, the displacement direction is the same as the direction of the restoring force. On the other hand, in a case where the displacement direction of the stick is a direction of moving away from the initial position, the restoring force is exerted in the opposite direction. Accordingly, in the former case, the viscosity is made greater than in the latter case, so as to increase the resistance feeling, whereby difference in the resistance feeling between both cases can be suppressed.

In still another configuration example, the restoring force imparting means may be configured such that, as a position of the stick becomes farther from the initial position, the restoring force becomes greater. Then, when the displacement direction of the stick is a direction of moving away from the initial position, the circuit may be configured to make the amplitude or the application time smaller as the position of the stick becomes farther from the initial position.

When the stick is displaced in a direction of moving away from the initial position, the direction of the restoring force for returning to the initial position is opposite to the displacement direction, and the restoring force becomes greater at a position farther from the initial position. In this regard, according to the above configuration example, the viscosity is made smaller at a position farther from the initial position, whereby a balance with the restoring force can be made.

In still another configuration example, among the amplitude, the frequency, and the application time, the circuit may be configured to change the amplitude and/or the application time without changing the frequency, to change the viscosity.

According to the above configuration example, in a case of changing the viscosity of the magnetorheological fluid using the amplitude, the frequency, and the application time of current to be applied for the magnetic field, the amplitude and/or the application time of the current is adjusted with the frequency remaining constant, thereby performing control of changing the viscosity. Thus, by adjusting the viscosity without changing the frequency, for example, in a case of desiring to change the viscosity during operation of the operation element by the user, an operation feeling through the adjustment can be made constant to a certain extent, and thus it is possible to prevent the user from perceiving a great change.

In still another configuration example, the circuit may be configured to increase the amplitude, and keep the application time constant or reduce the application time, to change the viscosity so as to increase.

According to the above configuration example, the viscosity is adjusted without changing the frequency. Thus, change in a feeling due to the adjustment can be prevented from being perceived as a great change by the user.

In still another configuration example, the controller may further include a direction detection section configured to detect the displacement direction of the stick, and the controller may change the intensity of the magnetic field on the basis of the displacement direction detected by the direction detection section.

According to the above configuration example, the displacement direction is detected inside the controller, and the intensity of the magnetic field can be controlled on the basis of the displacement direction. Thus, it becomes possible to perform high-response control.

In still another configuration example, on the basis of the displacement direction, the controller may be configured to correct a viscosity parameter which is outputted from system software for controlling the information processing system or a predetermined application operating on the information processing system and which designates a state of the viscosity of the magnetorheological fluid, and the controller may be configured change the intensity of the magnetic field on the basis of the corrected viscosity parameter.

According to the above configuration example, while the system software or the application merely outputs, to the controller, an instruction for the state of the viscosity roughly to a certain extent, it is possible to set an appropriate viscosity in accordance with the displacement direction of the stick at each time.

In still another configuration example, the controller may further include a library storage section storing a preset library in which a plurality of presets of information indicating viscosities for realizing predetermined viscosity states are allowed to be included. Further, on the basis of information which is outputted from system software for controlling the information processing system or a predetermined application operating on the information processing system and which designates any of the presets, the controller may be configured to acquire, from the preset library, information indicating a predetermined viscosity corresponding to the designated preset. Then, the controller may correct the acquired information on the basis of the displacement direction, and change the intensity of the magnetic field on the basis of the corrected viscosity parameter.

According to the above configuration example, it is possible to set the viscosity merely by designating the preset. Thus, the burden on the developer of the application or the like can be reduced.

### ADVANTAGEOUS EFFECTS OF THE INVENTION

According to the exemplary embodiments, when the stick is operated, control is performed in consideration of the restoring force, whereby variations in the resistance feeling given to the user via the stick can be suppressed.

### BRIEF DESCRIPTION OF THE DRAWINGS

[FIG. 1] FIG. 1 shows a non-limiting example of the configuration of an information processing system 1.
[FIG. 2] FIG. 2 is a function block diagram showing a non-limiting example of the internal configuration of an information processing apparatus main body 2.
[FIG. 3] FIG. 3 is a function block diagram showing a non-limiting example of the internal configuration of a controller 4.
[FIG. 4] FIG. 4 is a perspective view showing a non-limiting example of a stick device.
[FIG. 5] FIG. 5 is a schematic view showing a non-limiting example of the positional relationship among parts of the stick device.
[FIG. 6] FIG. 6 is a schematic view showing a non-limiting example of the positional relationship among parts of the stick device.
[FIG. 7] FIG. 7 is a schematic view showing a non-limiting example of the positional relationship among parts of the stick device.
[FIG. 8] FIG. 8 is a schematic view illustrating a non-limiting example of the configuration of an MRF unit.
[FIG. 9] FIG. 9 is a function block diagram showing a non-limiting example of the internal configuration of an analog stick 42.
[FIG. 10] FIG. 10 illustrates a non-limiting example of software layers.
[FIG. 11] FIG. 11 illustrates a non-limiting example of movable area information.
[FIG. 12] FIG. 12 illustrates a non-limiting example of movable area information.
[FIG. 13] FIG. 13 illustrates a non-limiting example of a control pattern A.
[FIG. 14] FIG. 14 illustrates a non-limiting example of a control pattern B.
[FIG. 15] FIG. 15 illustrates a non-limiting example of a control pattern C.
[FIG. 16] FIG. 16 illustrates a non-limiting example of a control pattern D.
[FIG. 17] FIG. 17 illustrates a non-limiting example of the principle of control in a first example.
[FIG. 18] FIG. 18 illustrates a non-limiting example of the principle of control in a second example.
[FIG. 19] FIG. 19 illustrates a non-limiting example of the principle of control in the second example.
[FIG. 20] FIG. 20 illustrates a non-limiting example of the principle of control in the second example.
[FIG. 21] FIG. 21 illustrates a non-limiting example of the principle of control in the second example.

### DESCRIPTION OF EMBODIMENTS

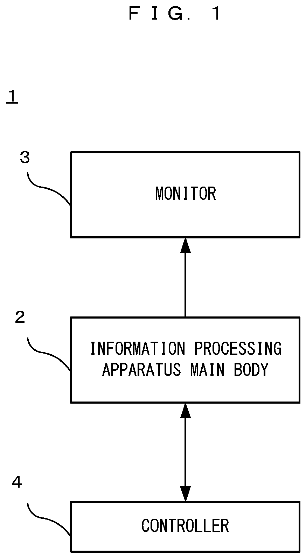

First, with reference to FIG. 1, an example of an information processing system according to the exemplary embodiment will be described. FIG. 1 schematically shows the configuration of the information processing system according to the exemplary embodiment. In FIG. 1, an information processing system 1 includes an information processing apparatus main body 2, a monitor 3, and a controller 4. In the information processing system 1, the information processing apparatus main body 2 executes predetermined information processing, and predetermined images and sounds generated as a result of the processing are outputted to the monitor 3. In the exemplary embodiment, the controller 4 includes a communication section capable of wireless communication, and is used while being wirelessly connected with the information processing apparatus main body 2. In another exemplary embodiment, the information processing apparatus main body 2 and the controller 4 may be connected with each other via a wire. Data indicating the content of a user's operation performed on the controller 4 is transmitted from the controller 4 to the information processing apparatus main body 2. Also, data for controlling operation of the controller 4 is transmitted from the information processing apparatus main body 2 to the controller 4. A controller control section (described later) included in the controller 4 performs various controls of the controller 4, including transmission and reception of such data.

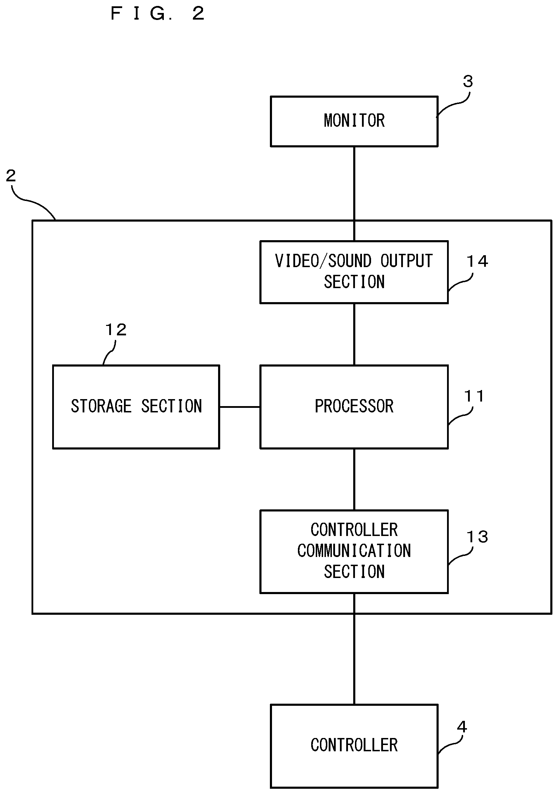

Next, the internal configuration of the information processing apparatus main body 2 will be described. FIG. 2 is a function block diagram showing an example of the internal configuration of the information processing apparatus main body 2. In FIG. 2, the information processing apparatus main body 2 includes a processor 11. The processor 11 is a circuit for controlling the information processing apparatus main body 2. The processor 11 executes various information processes to be executed in the information processing apparatus main body 2. The processor 11 may be formed of only a central processing unit (CPU), or may be formed of a system-on-a-chip (SoC) including a plurality of functions such as a CPU function and a graphics processing unit (GPU) function, for example. The processor 11 executes an information processing program (e.g., predetermined application program) stored in a storage section 12, thereby executing various information processes. The storage section 12 may be an internal storage medium such as a flash memory or a dynamic random access memory (DRAM), or may be configured using an external storage medium mounted to a slot (not shown), or the like, for example.

A video/sound output section 14 is electrically connected with the processor 11, and outputs various images and sounds generated as a result of information processing executed by the processor 11, to the monitor 3. A controller communication section 13 is connected with the processor 11. The controller communication section 13 is for transmitting and receiving various data to and from the controller 4 connected wirelessly.

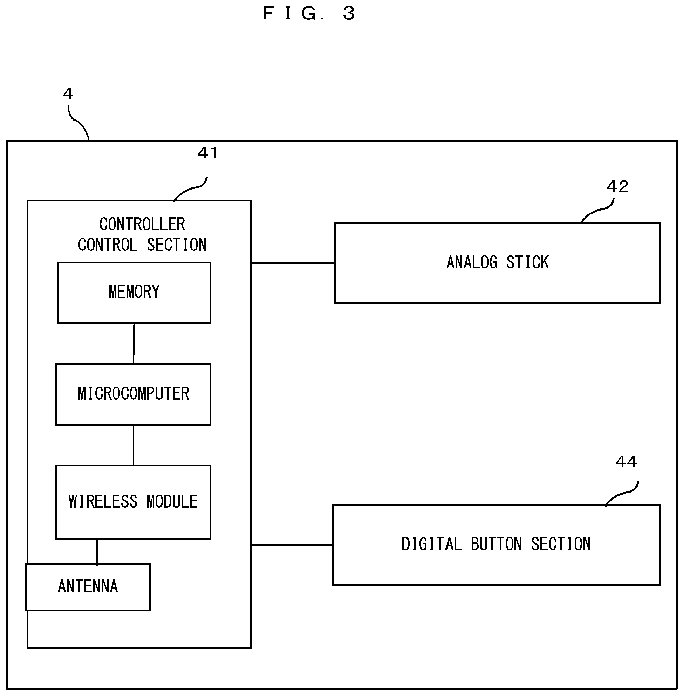

Next, the internal configuration of the controller 4 will be described. FIG. 3 is a function block diagram showing the internal configuration of the controller 4. In FIG. 3, the controller 4 includes a controller control section 41, an analog stick 42, and a digital button section 44. In the exemplary embodiment, a case where the controller 4 includes only one analog stick 42 is described. In another exemplary embodiment, the controller 4 may include a plurality of analog sticks 42. In addition, the controller 4 includes a battery and the like (not shown). Further, the controller 4 may include sensors such as an optical sensor and an inertial sensor.

The controller control section 41 is a circuit for controlling the controller 4, and includes, for control, a microcomputer, a memory, a wireless module, an antenna, and the like. While using the memory as a storage area in processing, the controller control section 41 controls the wireless module for wirelessly transmitting transmission data to the information processing apparatus main body 2. In the memory, data of a preset library and the like described later are also stored. In addition, the controller control section 41 performs processing such as control for the analog stick 42 as described later, in accordance with data received by the wireless module from the information processing apparatus main body 2 via the antenna.

The analog stick 42 is an operation element on which a direction can be inputted. A user can input a direction corresponding to a tilt direction by tilting the analog stick 42 (and input a magnitude corresponding to the tilt angle). The digital button section 44 includes at least one press-type button and/or trigger-type button.

Next, the configuration of the analog stick 42 in the exemplary embodiment will be described. In the exemplary embodiment, a configuration using a magnetorheological fluid (hereinafter, referred to as MRF) is adopted for the analog stick 42. Here, the MRF will be briefly described. The MRF has such characteristics that the MRF is a fluid when not subjected to a magnetic field, and comes into a semi-solid state (exhibits viscosity) when subjected to a magnetic field. In addition, the MRF also has characteristics of reacting to a magnetic field in several milliseconds. In the exemplary embodiment, the viscosity of the MRF is controlled and the MRF is caused to act on a movable axis of the analog stick 42 of the controller 4, whereby movability of the analog stick 42 is dynamically controlled.

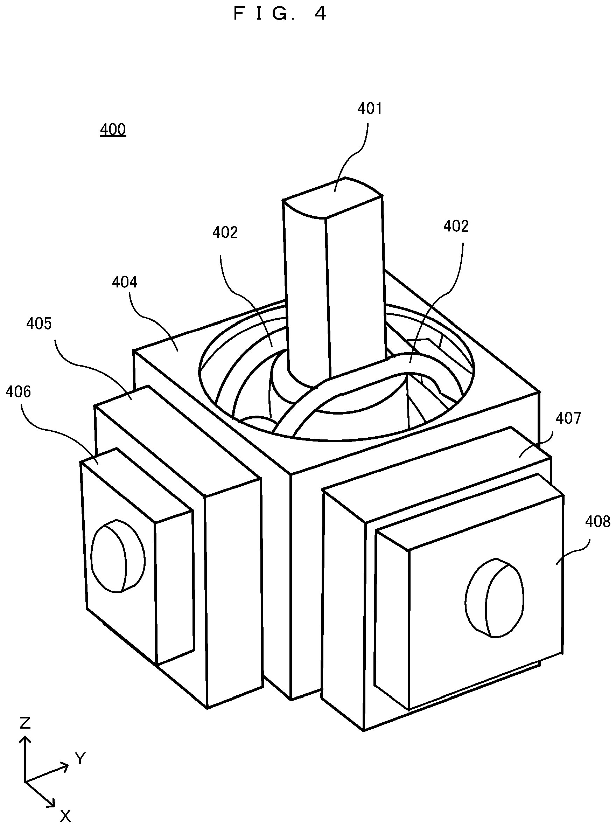

FIG. 4 shows an example of the outer appearance of parts (hereinafter, stick device) composing the analog stick 42 assumed in the exemplary embodiment. FIG. 4 is a perspective view of a stick device 400 composing the analog stick 42. In FIG. 4, the stick device 400 includes a stick portion 401, an outer enclosure 404, an X-axis variable resistor 405, an X-axis MRF unit 406, a Y-axis variable resistor 407, and a Y-axis MRF unit 408. Also, X-axis drive components 402 are provided adjacently to the stick portion 401. Although not shown, the stick device 400 further includes Y-axis drive components 403 described later. In a completed product of the controller 4, for example, a mushroom-shaped cover is put over the stick portion 401 of the stick device 400.

The stick portion 401 is a stick-shaped movable part. The X-axis variable resistor 405 and the Y-axis variable resistor 407 are for detecting the tilt degree of the stick portion 401. The X-axis MRF unit 406 and the Y-axis MRF unit 408 are for causing the MRF to act on the movable axis of the analog stick 42, as described above.

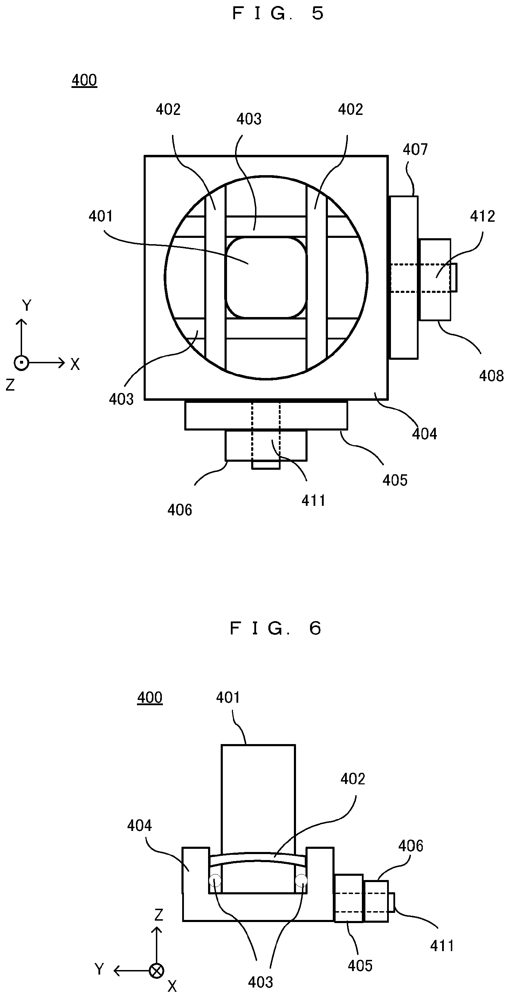

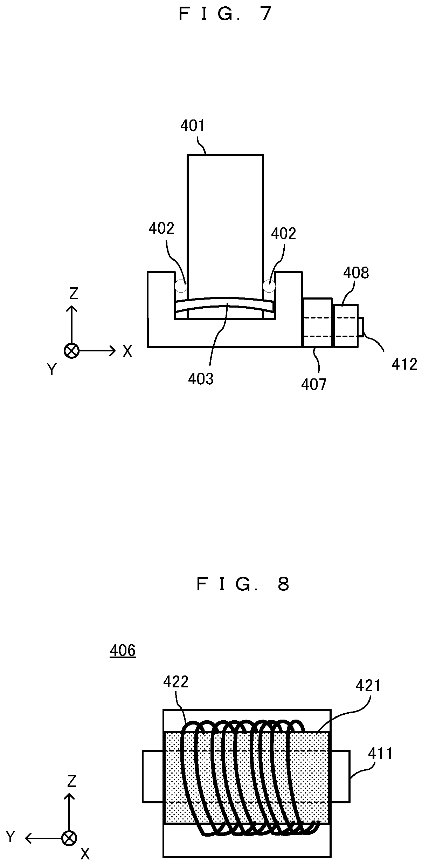

FIG. 5 is a schematic view showing the positional relationship among parts when the stick device 400 is viewed from above. FIG. 6 and FIG. 7 are schematic views (sectional views) showing the positional relationship among parts when the stick device 400 is viewed from lateral sides. FIG. 6 is a view as seen from the left side in FIG. 5, and FIG. 7 is a view as seen from the lower side in FIG. 5. As shown in FIG. 5 to FIG. 7, the stick portion 401 is placed such that the center of the stick portion 401 is located at the center position of the outer enclosure 404. In addition, the stick portion 401 is placed such that the longitudinal direction thereof is parallel to the Z axis. In the following description, the position of the center is referred to as an initial position, and an orientation in which the longitudinal direction of the stick portion 401 is parallel to the Z axis is referred to as an initial state.

In FIG. 5, the X-axis drive components 402 and Y-axis drive components 403 are provided adjacently to the stick portion 401. The X-axis drive components 402 move the X-axis variable resistor 405 in coordination with movement in the X axis of the stick portion 401. The Y-axis drive components 403 move the Y-axis variable resistor 407 in coordination with movement in the Y axis of the stick portion 401. Therefore, although not directly shown in the drawings, the X-axis drive components 402 are connected to the X-axis variable resistor 405 so as to coordinate therewith (inside the outer enclosure 404). Similarly, the Y-axis drive components are connected to the Y-axis variable resistor 407 so as to coordinate therewith.

Regarding the movable range of the stick, in the exemplary embodiment, in a case of tilting the stick portion 401, the stick portion 401 can be tilted up to the edge of a circular opening provided to the outer enclosure 404. That is, the circular opening restricts a basic movable area of the stick portion 401 (analog stick 42). In another exemplary embodiment, as a member for the restriction, for example, a restriction member having a similar function may be provided at a base part of the stick portion 401. Alternatively, in a completed product of the controller 4, a housing of the controller 4 may be used as a restriction member. That is, the housing may be provided with an opening having a predetermined shape, at a part where the stick device 400 is attached, so that the edge of the opening (shape) serves as a limitation boundary of the movable area of the analog stick 42.

Although not shown, a restoring force imparting section which is a mechanism for restoring the stick portion 401 to the initial position is provided below the stick portion 401. The restoring force imparting section is formed by a member or the like that has therein an elastic body such as a coil spring and transmits a restoring force for returning to the initial position so as to bring back the stick portion 401 into a vertical condition. In the exemplary embodiment, the greater the tilt of the stick portion 401 is, the greater the restoring force for returning to the initial position is. In addition, the restoring force imparting section works to restore the above drive components coordinating with the stick portion 401 to reference positions. A mechanism for imparting the restoring force is a known one and therefore the detailed description thereof is omitted. For example, the restoring force imparting section having the elastic body may be placed vertically to the bottom surface of the outer enclosure 404. Then, the drive body may be kept in a reference state by forces being applied directly or indirectly to the drive components.

Regarding the restoring force imparting section, the elastic body is used in the exemplary embodiment. In another exemplary embodiment, for example, a configuration using a magnet may be adopted as long as the same function is exerted. A configuration of imparting the restoring force constantly may be adopted, or such a restoration mechanism that enables the restoring force to be imparted only when necessary or enables control of the magnitude of the restoring force, may be adopted. In this case, a gear, a motor, and the like may be used in addition to or instead of the elastic body, the magnet, and the like.

The stick device 400 has the X-axis variable resistor 405 and the Y-axis variable resistor 407 adjacently to the outer enclosure 404. The variable resistor is a known technology and therefore the detailed description thereof is omitted. The X-axis variable resistor 405 and the Y-axis variable resistor 407 are for detecting the tilt degree of the stick portion 401. Each variable resistor is provided with a rotary shaft connected to the above drive components. The drive components rotate the rotary shaft in coordination with tilt and restoration movements of the stick portion 401. Then, a resistance value corresponding to the rotation of the rotary shaft is detected. On the basis of the resistance value, the processor 11 or the controller control section 41 can determine the tilt angle and the like on each of the X axis and the Y axis of the stick portion 401. That is, it is possible to calculate the direction in which the stick portion 401 moves (hereinafter, displacement direction) and the tilt degree of the stick portion 401 (the indicated position of the analog stick 42 on the XY plane; hereinafter, simply referred to as "position of the analog stick").

In the exemplary embodiment, the displacement direction of the stick portion 401 is calculated with software means by the processor 11 or the controller control section 41. However, a main component that performs this calculation is not limited to the above ones. For example, in another exemplary embodiment, a configuration in which the displacement direction is mechanically detected using a predetermined sensor may be adopted.

The stick device 400 has the X-axis MRF unit 406 adjacently on the outer side of the X-axis variable resistor 405. Similarly, the stick device 400 has the Y-axis MRF unit 408 adjacently on the outer side of the Y-axis variable resistor 407. In the exemplary embodiment, the rotary shaft 411 used in the X-axis variable resistor 405 extends outward, and the X-axis MRF unit 406 is provided so as to surround the rotary shaft 411. Similarly, the rotary shaft 412 used in the Y-axis variable resistor 407 extends outward, and the Y-axis MRF unit 408 is provided so as to surround the rotary shaft 412. Regarding the rotary shaft, for example, a configuration in which the rotary shaft used in the X-axis variable resistor 405 is connected with a rotary shaft in the MRF unit so as to coordinate therewith, may be adopted. In the following description, the X-axis MRF unit 406 and the Y-axis MRF unit 408 may be collectively referred to as MRF units.

Next, the configuration of the MRF unit will be described. FIG. 8 is a simplified schematic view illustrating a configuration example of the MRF unit. In FIG. 8, the rotary shaft 411 (a part thereof) connected (or joined) to the variable resistor penetrates an MRF container 421 containing an MRF. A magnetic field generation section 422 is provided so as to surround the outer side of the MRF container 421. The magnetic field generation section 422 is a coil, for example. The MRF unit is configured to be capable of causing current to flow through the magnetic field generation section 422. It is possible to generate a magnetic field by causing a predetermined amount of current to flow through the magnetic field generation section 422. Thus, the viscosity of the MRF in the MRF container 421 can be changed. That is, by controlling the amount (i.e., amplitude) of current to be applied to the magnetic field generation section 422, it is possible to control the intensity of the magnetic field and thus control the magnitude of the viscosity of the MRF. By increasing the viscosity of the MRF, it is possible to impart resistance against the rotational force of the rotary shaft 411. Since the rotary shaft 411 is connected so as to coordinate with the tilt of the stick portion 401 as described above, it is possible to impart a resistance force against a force to tilt the stick portion 401, through change in the viscosity of the MRF. That is, in the exemplary embodiment, the configuration is made such that movability of the stick portion 401 can be controlled by controlling the viscosity of the MRF as described above.

The view in FIG. 8 is shown in a simplified manner, for convenience of description. A supplementary description will be given about a more specific configuration of the MRF unit. A basic mechanism thereof is a structure similar to a disc brake of a bicycle or an automobile. Such a disc brake has a mechanism in which a rotating wheel is directly squeezed by mechanical parts to stop rotation by friction between parts. In a case of using the MRF as in the exemplary embodiment, a frictional force is changed through control of the viscosity of the fluid, whereby movement in the rotational direction is restricted.

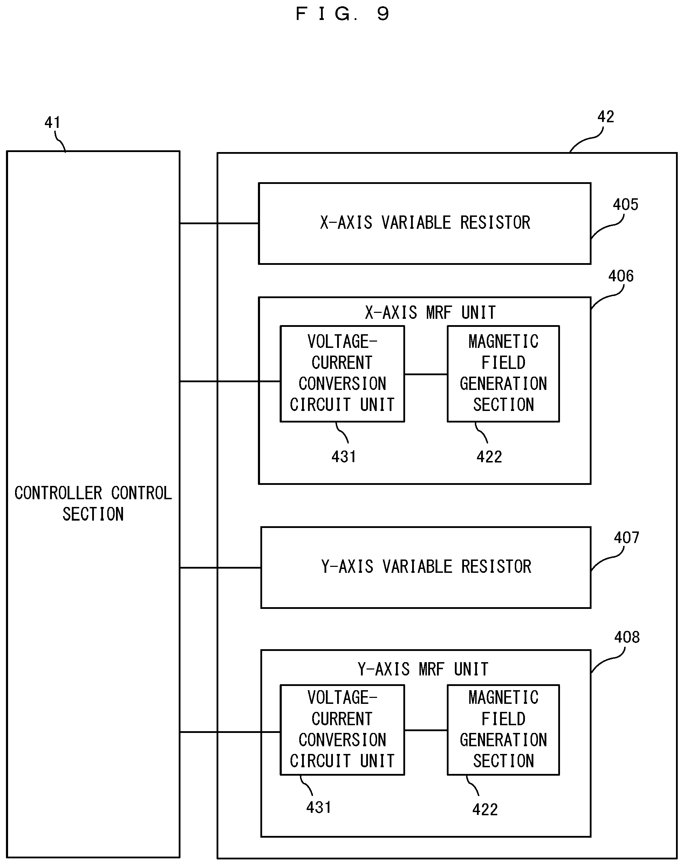

Next, the internal (electrical) configuration of the analog stick 42 will be described. FIG. 9 is a function block diagram showing the internal configuration of the analog stick 42. In FIG. 9, the analog stick 42 includes the X-axis variable resistor 405, the X-axis MRF unit 406, the Y-axis variable resistor 407, and the Y-axis MRF unit 408. These components are electrically connected with the controller control section 41, and predetermined data can be transmitted and received therebetween. The controller control section 41 can receive signals (e.g., voltage values) of the X-axis variable resistor 405 and the Y-axis variable resistor 407. On the basis of these signals, the controller control section 41 can calculate the position of the stick portion 401, the displacement direction thereof, and the change speed (displacement speed) of the position. The controller control section 41 can transmit a calculation result to the information processing apparatus main body 2. The position of the analog stick 42 is represented as two-dimensional coordinates on a two-dimensional plane with the center position as the initial position (origin), for example. On the basis of data transmitted from the information processing apparatus main body 2, the controller control section 41 can transmit, to each MRF unit, a signal for controlling the viscosity of the MRF unit, as described below.

Next, the MRF units will be described. The X-axis MRF unit 406 includes a voltage-current conversion circuit unit 431, and the magnetic field generation section 422 as described above, and both units are electrically connected to each other. When predetermined voltage is given to the voltage-current conversion circuit unit 431 from the controller control section 41, current based on the voltage can be outputted to the magnetic field generation section 422. As a result, the viscosity of the MRF can be changed as described above. Similarly, the Y-axis MRF unit 408 includes a voltage-current conversion circuit unit 431 and the magnetic field generation section 422, and the same control as described above can be performed. Thus, in the exemplary embodiment, it is possible to cause an influence due to viscosity change of the MRF, individually on each of the X axis and the Y axis in the stick portion 401. Basically, movability (viscosity) of the analog stick 42 is represented by the sum of values on two axes, i.e., the X axis and the Y axis. Meanwhile, for example, by increasing only the viscosity of the MRF of the Y-axis MRF unit 408, it is possible to make a state in which the stick portion 401 can be moved only in the X axis direction.

By performing viscosity control for the MRF with the above configuration, in the exemplary embodiment, it is possible to present various feelings to the user (user's fingers) operating the analog stick 42. For example, by controlling the viscosity of the MRF in accordance with a predetermined scene in an application, it is possible to give various feelings corresponding to the scene, to the fingers of the user operating the analog stick 42. In a case where the controller 4 includes a plurality of analog sticks 42, it is possible to control the viscosity of each analog stick individually. Thus, it is possible to provide an unprecedented new operation feeling to the user.

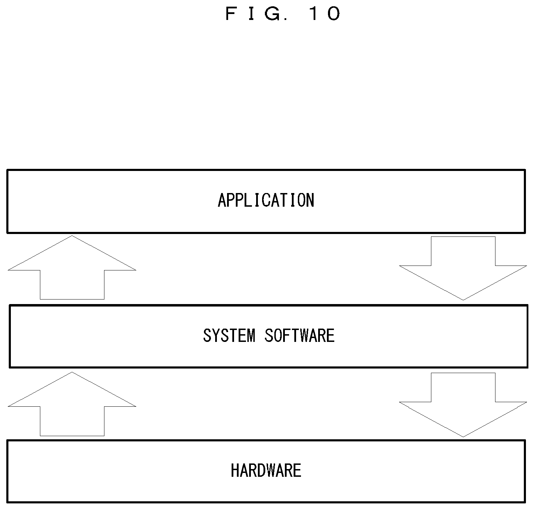

Hereinafter, various controls using the above configuration in the exemplary embodiment will be described. Prior to this, software layers in the information processing system of the exemplary embodiment will be described. FIG. 10 illustrates software layers in the exemplary embodiment. In the information processing system of the exemplary embodiment, various applications can be executed. These applications basically operate (are used) on common system software, according to the software structure. The system software serves for control of various pieces of hardware forming the information processing system 1. The hardware includes the information processing apparatus main body 2 and the controller 4 including the MRF units and the like, for example.

Here, parameters for controlling the MRF will be described. In the exemplary embodiment, as MRF control parameters for controlling the MRF, there are three kinds of parameters below. That is, the three kinds of parameters are (1) a viscosity parameter, (2) movable area information, and (3) a preset number. The MRF control parameters are used as follows, for example. First, the contents of the parameters are set in an application, and they are sent to the controller 4 via the system software. Then, the controller 4 controls the viscosity of the MRF on the basis of the MRF control parameters, as an example.

Each parameter will be described. The viscosity parameter includes parameters designating three values, i.e., an amplitude, a frequency, and an application time (corresponding to parameters P1 to P3 described later) to be outputted from the controller control section 41 to the voltage-current conversion circuit unit 431. A voltage command value having a waveform containing these parameters as components is outputted to the voltage-current conversion circuit unit 431, and current based on this is outputted to the magnetic field generation section 422. As a result, a magnetic field is generated and changes the viscosity of the MRF.

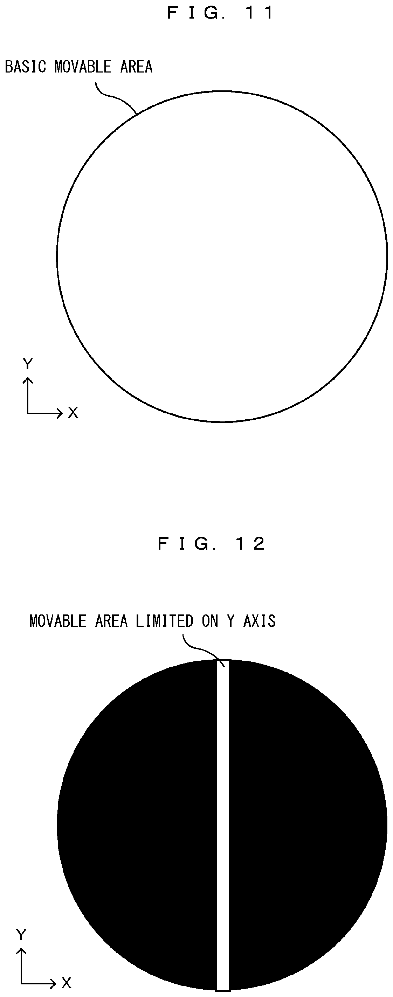

The movable area information is information defining the movable area of the analog stick 42. For example, a case where the movable area of the analog stick 42 is made to be an area only in the Y axis direction, is assumed. With reference to the drawings, first, the original movable area (hereinafter, referred to as basic movable area) is defined to be a circle area shown in FIG. 11. Then, a case of limiting the movable area to an area only in the Y axis direction as shown by a white part in FIG. 12, is assumed. In this case, in order to prevent the analog stick 42 from moving into a black area in FIG. 12, the content of the movable area information is set so as to indicate that the analog stick 42 does not tilt when the position of the analog stick 42 is to move into the black area. By this setting, even if the user attempts to move the analog stick 42 from the white part to the black area, the analog stick 42 can be prevented from tilting toward the black area at the boundary position, and as a result, a state in which the analog stick 42 cannot enter the black area can be realized. As a specific example of the data structure, a matrix of 100×100 regarded as the entire basic movable area is prepared, and a value indicating whether or not each position is in a movable area is set in a binary manner (0 or 1) on the matrix, thereby generating the movable area information. Regarding the example in FIG. 12, in the matrix, elements corresponding to the black part are set at 1, and the other elements are set at 0, thus constituting the content of the movable area information. As a matter of course, a specific data structure of the movable area information is not limited thereto, and any data structure may be adopted as long as the movable area can be defined. As described above, in the exemplary embodiment, information defining the movable area (the shape thereof) of the analog stick 42 in any way can be used as the movable area information.

The preset number is a number designating a preset defined in advance. The preset is data defining in advance what viscosity parameter is set for each position (in the basic movable area) where the analog stick 42 is located. In other words, the preset is data designating in advance a viscosity parameter with respect to each position in the basic movable area and the displacement speed of the analog stick 42 at the position. With such presets prepared, a person such as an application developer can easily use viscosity control for the MRF merely by designating the preset without designing and setting the content of the viscosity parameter each time. As an example of the data structure, data in which viscosity parameters are set for each of a predetermined number of matrices regarded as the entire basic movable area as described above may be defined as the presets. In the exemplary embodiment, a plurality of the presets are stored in advance as a "preset library" in a memory in the controller control section 41. As a usage example of the preset, an application transmits a predetermined preset number to the controller control section 41 via the system software. In this case, the controller control section 41 reads a corresponding preset number from the preset library. Further, the viscosity parameter is determined on the basis of the content of the preset, and the position and the displacement speed of the analog stick 42 at this time. Then, the controller control section 41 controls the MRF unit on the basis of the viscosity parameter.

In the above description, information provided as the preset has the viscosity parameter, and the position and the displacement speed, so as to be associated with each other. However, the preset is not limited to this data structure. In another exemplary embodiment, for example, a data structure merely having a viscosity parameter without having information of a position and a displacement speed may be adopted. That is, data in which several viscosity parameters are merely defined in advance may be provided as presets.

Regarding the preset library, a movable area preset defining only a movable area and a preset defining only the viscosity parameter may be separately provided. For example, it is assumed that there is a preset of concentric movable areas. In this case, viscosities of the MRF for the center circle and the surrounding annular areas may be taken from a preset of viscosity parameters prepared separately. Thus, while adopting a preset configuration, it is possible to increase varieties of expressions using the MRF.

The preset library stored in the controller control section 41 may be allowed to be updated. For example, the preset library may be updated regularly via the Internet. Alternatively, even in a case of not being connected to the Internet, the preset library may be updated via a predetermined storage medium. As an example, the information processing apparatus main body 2 connected to the controller 4 may read a memory card containing update data, whereby the preset library may be updated.

Instead of or in addition to the configuration in which the controller control section 41 stores the preset library, such a configuration that a preset is independently defined in the system software or an application may be adopted.

Next, the relationship among the application, the system software, and the controller 4 in terms of a main component that performs viscosity control for the MRF will be described. The exemplary embodiment mainly relates to control of the controller 4 using the MRF unit, in other words, viscosity control for the MRF. In the exemplary embodiment, as a main component that controls (designates and generates) the viscosity, three patterns are assumed: a case of the application, a case of the system software, and a case of the controller 4. In other words, as a viscosity control method for the MRF, basically the following three patterns can be used: a case of performing control mainly by the application, a case of performing control mainly by the system software, and a case of performing control mainly by the controller 4.

One of reasons for assuming such a plurality of control patterns is that a difference between the communication speed between the information processing apparatus main body 2 and the controller 4 and the execution speed of the application executed by the information processing apparatus main body 2 (in other words, difference in response performance) is taken into consideration. These speeds can have a relationship: "the communication speed between the analog stick 42 and the controller control section 41 > the communication speed between the information processing apparatus main body 2 and the controller control section 41 > the processing speed of the application". In the exemplary embodiment, for example, it is assumed that the communication speed between the analog stick 42 and the controller control section 41 is 1 kHz and the communication speed between the information processing apparatus main body 2 and the controller control section 41 is 200 Hz. In addition, regarding the processing speed of the application, it is assumed that the application operates at 60 Hz. In this speed relationship, the operation cycle at the controller side is faster than the operation cycle at the application side. Therefore, in a case where the application side performs a main role of outputting the viscosity of the MRF, it is considered that the cycle at which the output reaches the controller control section 41 is slower than the cycle at which the controller control section 41 acquires the position of the analog stick 42. In this regard, in particular, in a case of performing control of changing the viscosity directly in accordance with the position of the analog stick 42, having higher response can realize more immediate viscosity change, and thus it is considered that varieties of expressions for presenting feelings also increase. For example, sharp change in feeling and an edge-like feeling expression become possible. From this standpoint, it can be said that a control method that is as less through the application as possible is desirable. On the other hand, a memory capacity provided to the controller control section 41 is not very large in general, and therefore it is assumed that the number of the presets that can be stored is limited to a certain extent. In this regard, performing control mainly at the application side is likely to allow more various presets to be used. Alternatively, generating the viscosity parameter without depending on the preset, for example, makes it possible to output the viscosity parameter more finely, thus increasing the degree of freedom in viscosity control. In particular, in a case of performing viscosity control without directly being based on the position of the analog stick 42, response might not need to be very high. Therefore, in the exemplary embodiment, a developer can selectively use the above control patterns in accordance with the content of the application to be developed, the use case, and the like.

Hereinafter, the summary of the above various control patterns will be described.

### [Case of performing control by application]

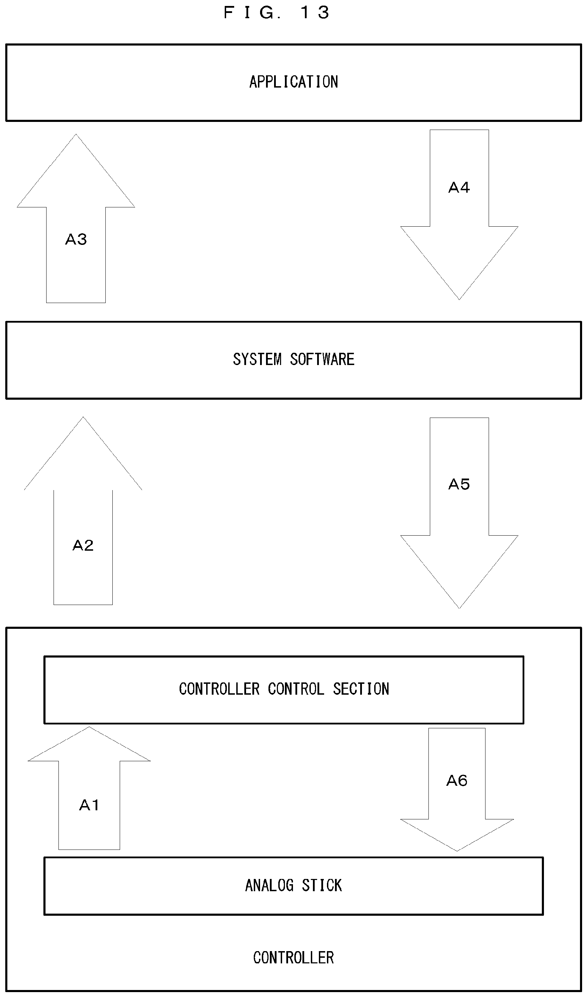

First, a case of performing control mainly by the application (hereinafter, referred to as control pattern A) will be described. Here, as an example, control in which the application outputs the viscosity parameter directly on the basis of the execution state of the application, will be described. Flow of control in this case is, for example, as shown in FIG. 13. First, (A1) the controller control section 41 receives voltage values from the analog stick 42. Next, (A2) on the basis of the voltage values, the controller control section 41 calculates the position and the displacement speed of the analog stick 42, and sends them to the system software. Further, (A3) the system software outputs the position and the displacement speed of the analog stick 42 to the application. Thus, at the application side, the position and the displacement speed of the analog stick 42 can be obtained. Next, (A4) at the application side, application processing is performed so as to reflect the position and the displacement speed of the analog stick 42 outputted from the system software, and the viscosity parameter is generated on the basis of the execution state of the application resulting from the application processing, and is sent to the system software. The execution state of the application is, for example, the position of a virtual object in a virtual space, the state of the virtual object, whether or not the progress status of the application corresponds to a predetermined scene, and the like. Next, (A5) the system software sends the viscosity parameter to the controller control section 41. Then, (A6) the controller control section 41 outputs a voltage command value based on the viscosity parameter to the MRF unit. As described above, in this control pattern, control is performed such that the application performs a main role of outputting the viscosity control parameter directly on the basis of the state of the application.

The application may be configured to generate and output the viscosity parameter, or may be configured such that a viscosity library storing predetermined presets is prepared at the application side. In the latter case, if each preset has such a data structure that merely has a viscosity parameter without having information of the position and the displacement speed of the analog stick, a predetermined preset number may be designated from the library and the viscosity parameter corresponding to the preset number may be acquired and outputted. If the preset has such a data structure that data such as the application state is associated with the viscosity parameter, the viscosity parameter may be acquired on the basis of the preset number and data such as the application state.

In the above example, the viscosity parameter is outputted directly on the basis of the execution state of the application. However, the viscosity parameter may be outputted directly on the basis of the position of the analog stick. In this case, the position of the analog stick may be transmitted to the application side, and the viscosity parameter may be generated directly on the basis of the position of the analog stick. Then, the generated viscosity parameter may be outputted to the controller control section 41.

### [Case of performing control by controller]

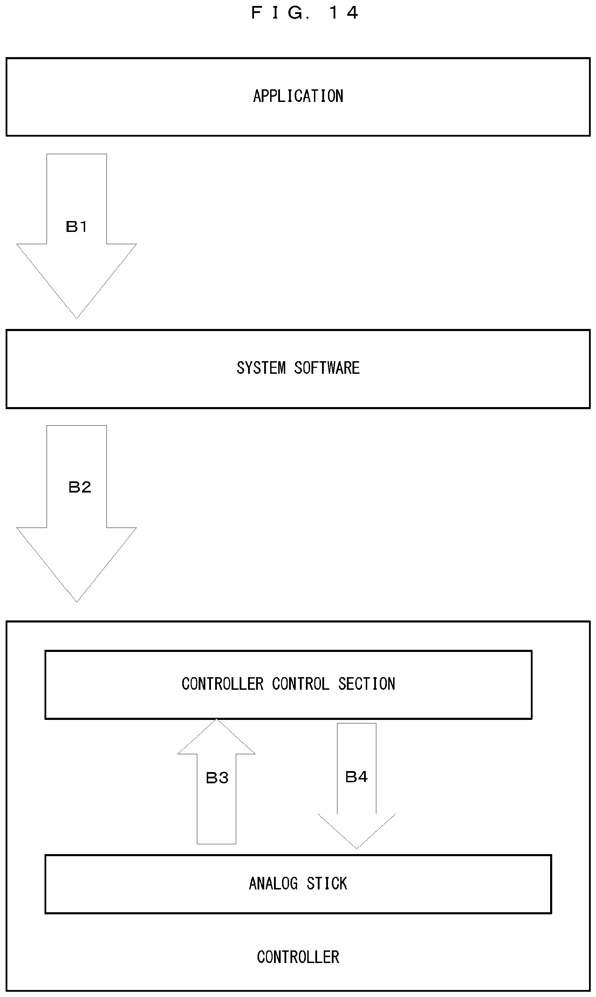

Next, a case of performing control mainly by the controller 4 will be described. In the exemplary embodiment, as an example, control is performed using the preset library stored in the controller control section 41 as described above. Flow of this control is, for example, as shown in FIG. 14 (hereinafter, this control is referred to as control pattern B). First, (B1) the application designates a predetermined preset number and sends the preset number to the system software. (B2) The system software sends the preset number to the controller control section 41. (B3) The controller control section 41 calculates the position and the displacement speed of the analog stick 42 on the basis of voltage values from the analog stick 42 at this time. (B4) Next, the controller control section 41 acquires the preset corresponding to the preset number from the preset library. Then, the controller control section 41 acquires the viscosity parameter on the basis of the defined content of the preset and the calculated position and/or displacement speed of the analog stick 42. Then, the controller control section 41 outputs a voltage command value based on the viscosity parameter to the MRF unit. As described above, merely by the preset number being designated from the application, viscosity control based on the corresponding preset is performed in the controller 4.

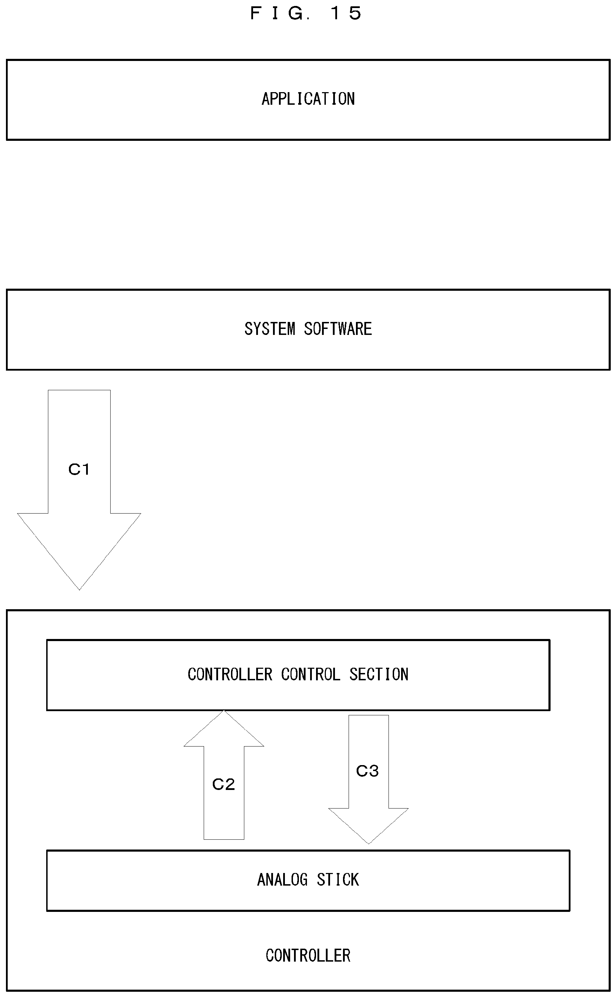

As another example of the case of performing control mainly by the controller 4, control as shown in FIG. 15 may be performed (hereinafter, this control is referred to as control pattern C). In this case, it is assumed that the viscosity of the MRF is controlled irrespective of the application. For example, a case of allowing the viscosity to be set as preferred by the user is conceivable. In this case, for example, the user may designate any viscosity from a "setting menu" on the information processing apparatus main body 2, and the designation content may be stored as a preset. Then, viscosity control in accordance with this preset may be performed constantly or in an appropriate scene. In FIG. 15, under the assumption that the above preset setting has been finished, first, (C1) the system software sends the above stored preset number to the controller control section 41. Next, (C2) the controller control section 41 calculates the position and the displacement speed of the analog stick 42 on the basis of voltage values from the analog stick 42 at this time. Next, (C3) the controller control section 41 generates a viscosity parameter on the basis of the preset number and the calculated position and displacement speed of the analog stick 42. Then, the controller control section 41 outputs a voltage command value based on the viscosity parameter to the MRF unit. Thus, the viscosity for the analog stick 42 can be controlled irrespective of the application.

In the above control examples, the position and the like of the analog stick 42 are used. However, in another exemplary embodiment, control not using the position and the like may be performed. For example, control may be performed such that a predetermined viscosity is imparted uniformly over the entire movable range of the analog stick 42, without using the position of the analog stick 42 (information indicating the position). That is, control may be performed such that a predetermined viscosity is imparted constantly.

### [Case of performing control by system]

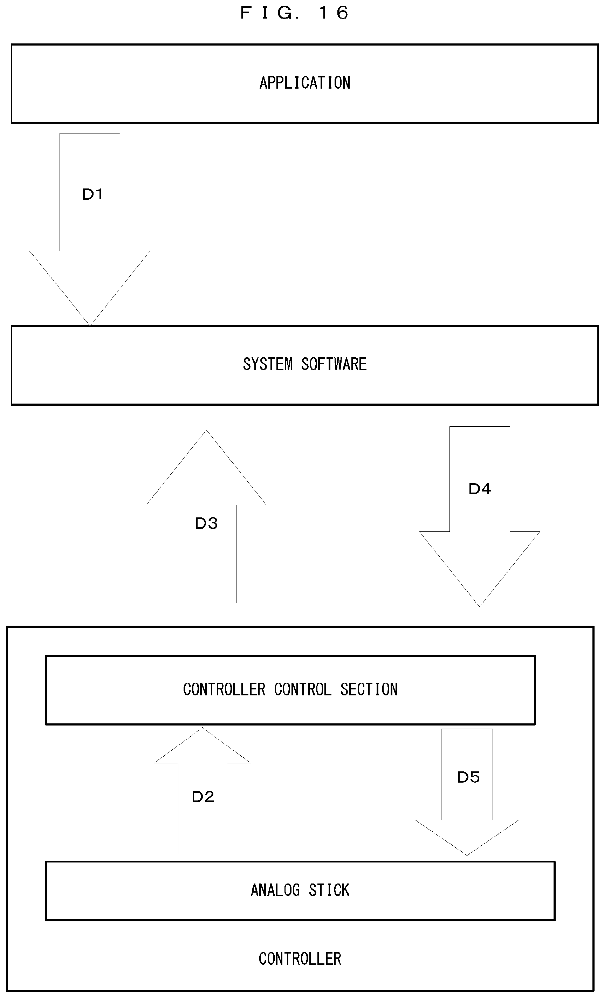

Next, a case of performing control mainly by the system software (hereinafter, referred to as control pattern D) will be described. As described above, in the exemplary embodiment, the preset library is stored in the controller control section 41, and in general, the storage capacity of the memory provided to the controller control section 41 is limited to a certain extent. Thus, the patterns of viscosity controls stored in the preset library might be limited to a certain extent. Therefore, while ensuring response to a certain extent, in order to allow more expressions than in the preset library as feeling expressions by viscosity control, a pattern of performing control by the system software is also available. Flow of control in this case is, for example, as shown in FIG. 16. First, (D1) the application sends the above-described movable area information to the system software. (D2) The controller control section 41 receives voltage values from the analog stick 42. (D3) Further, on the basis of the voltage values, the controller control section 41 calculates the position and the displacement speed of the analog stick 42, and sends them to the system software. (D4) The system software generates the viscosity parameter on the basis of the above movable area information and the position and the displacement speed of the analog stick 42, and sends the viscosity parameter to the controller control section 41. (D5) Then, the controller control section 41 outputs a voltage command value based on the viscosity parameter to the MRF unit. In other words, flow from (D2) to (D5) in FIG. 16 forms a loop, and the application sends the movable area information to the loop at any timing.

In the exemplary embodiment, such a plurality of control patterns are available, so that convenience for the application developer can be enhanced. The above control patterns are merely examples, and other control methods may be adopted in accordance with the use case of the application.

### [Example of selective use of control patterns]

As an example of selective use of the above control patterns, a case of selectively using "viscosity control directly in accordance with the position of the analog stick 42" and "viscosity control not directly in accordance with the position of the analog stick 42" will be described. In this case, more appropriate control is used on the basis of whether or not to perform viscosity control directly in accordance with the position of the analog stick 42. For example, such an application that a virtual object can be moved in a virtual space is assumed. In this application, it is possible to perform such control that the viscosity changes in accordance with the location of the virtual object in the virtual space while the virtual object is moved. This control is viscosity control that is not directly in accordance with the position of the analog stick 42. As an example, in such an application that a virtual object can be operated by the analog stick 42, the viscosity of the analog stick 42 may be increased in accordance with the position of the virtual object in a virtual space. In this case, the virtual object can be moved on the basis of the position of the analog stick 42, but this is not a case where the viscosity is controlled directly on the basis of the position of the analog stick 42. After all, the viscosity is controlled directly on the basis of the "position of the virtual object in the virtual space", in other words, the execution state of the application. Therefore, in such a case, control of outputting the viscosity parameter is performed mainly at the application side. As a method for acquiring and outputting the viscosity parameter, the viscosity parameter may be generated in a code of the application, or presets of viscosity parameters may be provided as a library in the application. In the latter case, for example, presets corresponding to terrains in a virtual space may be prepared, and a predetermined preset may be designated on the basis of the position of a virtual object. In this way, in a case where the application side performs a main role of preparing and outputting the viscosity parameter, it is possible to increase varieties of expressions of feelings to be given to the user.

On the other hand, in a predetermined scene in the application (e.g., a scene other than a scene in which a virtual object is moved), if viscosity control is to be performed directly in accordance with the position of the analog stick 42, the controller control section 41 can perform a main role of performing viscosity control.

Hereinafter, various control examples based on the above configurations and control patterns will be described.

### [First example]

First, a first example of the exemplary embodiment will be described. This example is an example of control mainly aiming at achieving both "presentation of various feelings" and "restoration to the initial position when no fingers are touching the analog stick".

### [Principle of control in first example]

First, the principle of control in the first example will be described. In general, an operation feeling for the analog stick 42 likely to be desired by the user is such an operation feeling that the position of the analog stick 42 returns to the initial position (initial state) when the hand or the fingers are taken off the analog stick 42. In this regard, in a case where the above-described MRF is used for the analog stick 42, it is possible to present various feelings to the user by increasing the viscosity of the MRF. Meanwhile, in a state in which the viscosity is high to a certain extent, even if the hand or the fingers are taken off the analog stick 42, the MRF serves as a brake, so that the analog stick 42 might remain tilted without returning to the initial position or might move very slowly though returning. Therefore, it might be impossible to provide an operation feeling that the user will desire for the analog stick 42. In this regard, as a solution, reducing a resistance force of the MRF or increasing the restoring force thereof is conceivable. However, if the resistance force is reduced, user experiences and expressions in applications that can be realized by the resistance force are constrained. Accordingly, in the first example, control of current to be applied to the MRF is performed in the way as described below, thus achieving both presentation of a feeling using the MRF and an initial position restoration operation.

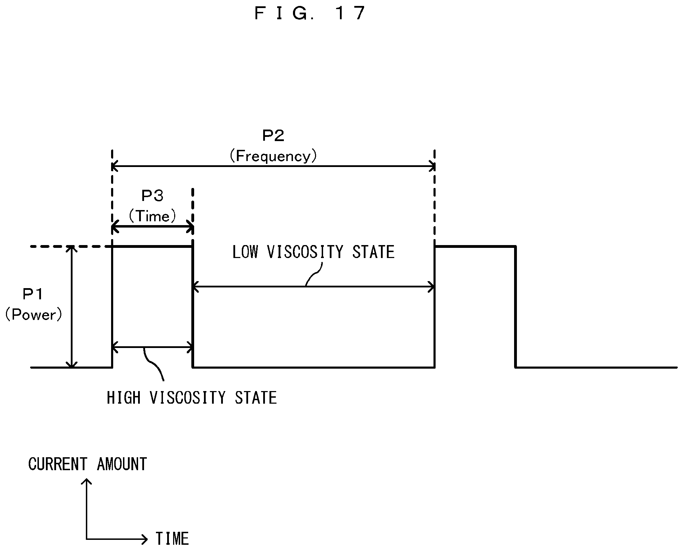

FIG. 17 is a timing chart illustrating control in the first example. In FIG. 17, the vertical axis indicates the amplitude (current amount) and the horizontal axis indicates time. In FIG. 17, P1 denotes the amplitude and P2 denotes the cycle (frequency). In addition, P3 denotes a time during which current is caused to flow in one cycle (i.e., a time during which voltage is applied; hereinafter, referred to as application time). In the exemplary embodiment, the cycle P2 and the application time P3 can be controlled in a unit of 1 millisecond. In addition, the amplitude P1, the cycle P2, and the application time P3 correspond to the "viscosity parameter" described above. Regarding the application time P3, control may be performed by designating the duty cycle (Duty), instead of designating a time. That is, the duty cycle may be controlled as a parameter so that the application time is controlled consequently. This can also be said to be control of the application time. The same applies to the other parameters, that is, as long as a target parameter is controlled consequently, a specific method therefor and a parameter used for the calculation may be adopted as appropriate.

Here, the value of the amplitude P1 is such a value that the viscosity of the MRF becomes greater than the restoring force by the restoring force imparting section. That is, this value is such a value that the analog stick 42 remains tilted even when the fingers are taken off. Then, in the first example, control is performed such that, in a certain cycle, first, current having a magnitude indicated by P1 is caused to flow during a period indicated by the application time P3, and thereafter, no current is caused to flow. As a result, during the period indicated by the application time P3, the viscosity of the MRF is in such a state that the analog stick 42 is not autonomously restored to the initial position even if the fingers are taken off (hereinafter, referred to as a high viscosity state). As used herein, "not being restored to the initial position" basically refers to such a state that the analog stick 42 does not move even if the fingers are taken off the analog stick 42. However, without limitation thereto, in another exemplary embodiment, the high viscosity state may be such a state that the analog stick 42 autonomously moves toward the initial position but the movement speed thereof is very slow. For example, in a case of not being in the high viscosity state, the analog stick 42 is restored to the initial position in less than 1 second after the fingers are taken off, whereas in the high viscosity state, it takes 5 seconds or 10 seconds for the analog stick 42 to be restored to the initial position because the movement speed is slow.

On the other hand, in a period other than P3, since voltage is not applied (current is not caused to flow), the viscosity of the MRF is reduced so that the restoring force becomes greater than the resistance force by the viscosity of the MRF, thus making such a state that the analog stick can be autonomously restored to the initial position (hereinafter, this state is referred to as low viscosity state). As described above, in the first example, the high viscosity state and the low viscosity state are provided in one cycle, thereby preparing a period for the analog stick 42 to be restored to the initial position. Through repetition of such cycles, the viscosity periodically changes alternately between the high viscosity state and the low viscosity state. As a result, a period for the analog stick 42 to be restored to the initial position is produced as a short period, and the analog stick 42 can be restored to the initial position during this period. In this way, while presentation of a feeling using the high viscosity state is achieved, autonomous initial position restoration can be performed at a timing when the low viscosity state period comes, and thus both of such operation feelings are achieved without giving a strange feeling to the user.

Here, if the period of the low viscosity state is extremely short, a restoration operation of the analog stick 42 to the initial position might not be started substantially. Therefore, in the first example, the period of the low viscosity state is set to be not less than such a predetermined period that substantial start of the restoration operation is ensured.

**In** the above example, a case where voltage is not applied in the low viscosity state, has been shown. However, in another example, voltage at such a level that does not inhibit the initial position restoration operation of the analog stick 42 may be applied in the period of the low viscosity state.

Specific values of the viscosity parameters for realizing the high viscosity state and the low viscosity state may be stored as presets as described above in the controller control section 41. Alternatively, such presets may be provided in the system software, instead of being stored in the controller control section 41. Still alternatively, such presets may be defined at the application side, and may be provided as a part of the application program. In this way, by defining the high viscosity state and the low viscosity state as presets in advance, it becomes possible to easily designate the high viscosity state and the low viscosity state, whereby the burden on the developer can be reduced.

Next, other control examples using the high viscosity state and the low viscosity state will be described.

First, a control example in which a viscosity state is designated from the application and a viscosity parameter is generated accordingly in the system software, will be described. In this example, first, from the application, the amplitude P1 and the cycle P2 are outputted as viscosity information to the system software. In the system software, the application time P3 is calculated on the basis of the amplitude P1 and the cycle P2. In this calculation, the system software calculates the application time P3 such that the amplitude P1 and the cycle P2 are adapted to the high viscosity state and a period for the analog stick 42 to return to the initial position (period of low viscosity state) can be ensured. For example, the system software is configured to have data in which values of the amplitude P1 and the cycle P2, and appropriate values of the application time P3 corresponding thereto, are associated with each other. Then, when having received the viscosity information from the application, the system software determines an appropriate application time P3 by referring to the data. Alternatively, the application time P3 may be determined through calculation using a predetermined algorithm. Then, the system software outputs the determined application time P3, and the amplitude P1 and the cycle P2 received from the application, to the controller control section 41, as the viscosity parameter. Such control can reduce the data size and the storage amount as compared to a case of storing all three components constituting the viscosity parameter as a preset.

Next, as another control example, control in which the viscosity of the MRF is adjusted (viscosity parameter is corrected) in accordance with the restoring force by the restoring force imparting section, will be described. This is for considering difference in the restoring force due to individual variations of the controller 4. Specifically, in this control, a restoring force parameter indicating the strength, performance, and the like of the restoring force is acquired by a predetermined method. Then, the content of the viscosity parameter is corrected in accordance with the restoring force parameter. In a case of performing such control, first, the restoring force parameter needs to be acquired. The restoring force parameter may be acquired by the following methods. First, it is conceivable that a sensor for directly measuring the restoring force is provided to the controller 4 or the like. As another method, for example, the user may be made to perform an operation of tilting the analog stick 42 to a movable limit position, e.g., fully to the right end, and then taking off the fingers, and a restoration time until the analog stick 42 returns to the initial position may be measured. In this case, the restoration time may be directly used as the restoring force parameter, or the restoring force parameter may be separately calculated on the basis of the restoration time.

In the exemplary embodiment, the case of having an elastic body such as a coil spring as the restoring force imparting section is shown as an example, and therefore torque of the coil spring according to the position of the analog stick 42 may be used as the restoring force parameter. That is, torque of the coil spring according to the present position of the analog stick 42 may be calculated by a predetermined method, and using the torque as the restoring force parameter, the content of the viscosity parameter may be corrected.

Control may be performed using the position of the analog stick 42, instead of using the restoring force parameter. That is, the content of the viscosity parameter for realizing the high viscosity state or the low viscosity state may be adjusted in accordance with the position of the analog stick 42. In addition, the period of the high viscosity state or the low viscosity state may be controlled so as to be changed in accordance with the position of the analog stick 42.

Next, as another control example, when the restoring force is small, at least one of the following controls may be performed as compared to when the restoring force is great.
(1) Control of reducing the viscosity in the high viscosity state
(2) Control of shortening the period of the high viscosity state
(3) Control of reducing the viscosity in the low viscosity state (under the assumption that a certain level of voltage is applied even in the low viscosity state)
(4) Control of prolonging the period of the low viscosity state

Any of the above controls is for making it easier to return to the initial position when the restoring force is small. For example, such control of reducing the viscosity in the high viscosity state as the restoring force becomes smaller, is conceivable.

As still another control example, if the restoring force indicated by the restoring force parameter is smaller than a predetermined reference value, it may be determined that the restoring force is small, and control may be performed to make it easier to return to the initial position.

Next, a specific example of correction for the restoring force parameter will be described. In the first example, for example, first, the viscosity parameter is sent from the application or the system software to the controller control section 41. Next, for the viscosity parameter, the controller control section 41 corrects the amplitude P1 and/or the application time P3 in accordance with the restoring force parameter. Then, viscosity control is performed using the corrected viscosity parameter. Through such correction, adjustment of the viscosity of the MRF in accordance with the restoring force is performed. Here, regarding correction for the viscosity parameter, it is also possible for the controller control section 41 to perform correction of changing the cycle P2. However, in a case of changing the cycle P2 to change the viscosity, change in a feeling given to the user becomes great, so that a strange feeling might be given on the contrary. Therefore, in this example, with the cycle P2 remaining constant, the amplitude P1 or the application time P3 is changed to adjust the viscosity. It is noted that the cycle remaining "constant" may not necessarily be strictly constant and there may be slight deviations or variation widths in the cycles as long as the cycles can be considered to be substantially constant.

Regarding the content of change of the amplitude P1 or the application time P3, in the first example, specifically, control is performed so that the amplitude P1 is increased and the application time P3 is kept constant or is reduced. This is because, in a case of desiring to increase the viscosity, if control is performed so as to increase only the application time P3, the period of the low viscosity state is shortened and an initial position restoration operation becomes less likely to occur. Therefore, the viscosity is increased by increasing the amplitude P1 instead of the application time P3. In this case, the application time P3 may be not changed (kept constant) or may be reduced so as to ensure a longer period for the low viscosity state.

In the above description, a main component that performs adjustment of the viscosity parameter in accordance with the restoring force is the controller control section 41, as an example. However, in another example, the same processing may be performed at the system software side or the application side.

As described above, in the first example, the viscosity periodically changes alternately between the high viscosity state and the low viscosity state. As a result, a period for the analog stick 42 to be restored to the initial position is produced as a short period, and the analog stick 42 can be restored to the initial position during this period. In this way, regarding operation feelings for the analog stick 42, presentation of a feeling using the high viscosity state and an initial position restoration operation using the low viscosity state are both achieved.

### [Second example]

Next, the second example will be described. This example is an example of control that mainly considers the relationship between the displacement direction of the analog stick 42 and the restoring force by the restoring force imparting section. Specifically, this is control for making constant a resistance feeling that the user receives at the user's fingers, irrespective of the displacement direction of the analog stick 42.

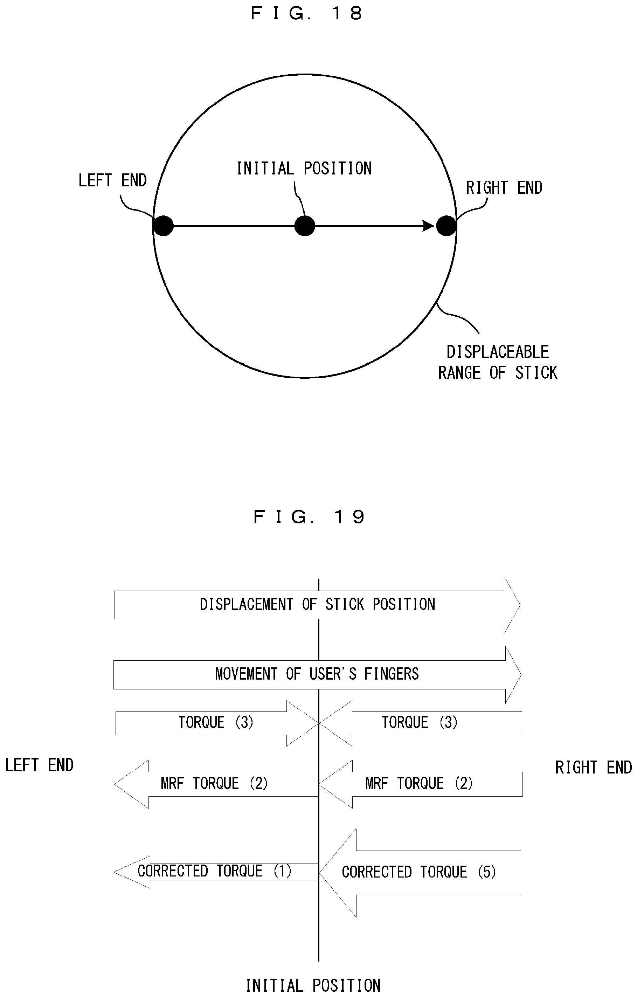

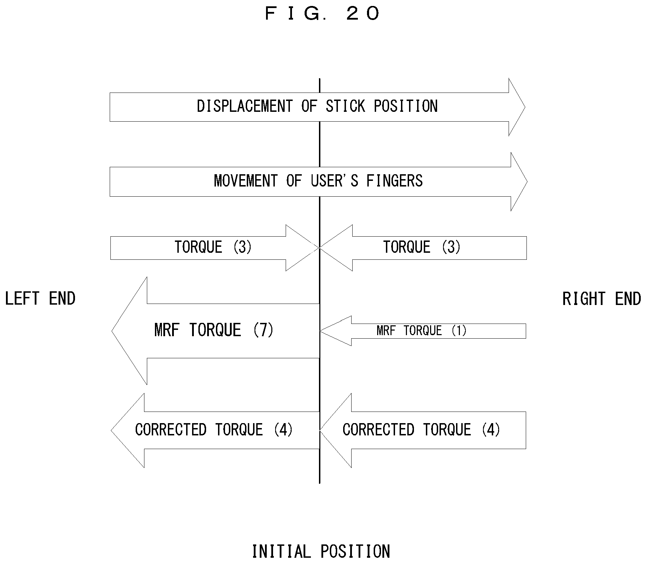

The principle of control in the second example will be described. First, a case where the position of the analog stick 42 is displaced toward the initial position and a case where the position of the analog stick 42 is displaced toward the outer side as seen from the initial position, are assumed, and thus the direction of the restoring force relative to the displacement direction of the stick can be different. Therefore, in order to allow the fingers to feel certain (constant) torque, the viscosity of the MRF needs to be corrected in consideration of the influence of the restoring force by the restoring force imparting section in accordance with the position and the displacement direction of the analog stick 42. As an example, a case of displacing the analog stick 42 through a straight trajectory from the left end to the right end of the movable range thereof, is assumed. FIG. 18 schematically shows the trajectory in the case of displacing the analog stick 42 from the left end to the right end in the movable range. FIG. 19 schematically shows what torque is obtained after correction in a case of not performing control in the exemplary embodiment as described later. FIG. 20 schematically shows what torque is obtained after correction in a case of performing the control in the exemplary embodiment.

Here, in FIG. 19 and FIG. 20, "displacement of the stick position" indicates displacement of the position of the analog stick, and "movement of the user's fingers" indicates actual movement of the user's fingers. In FIG. 19 and FIG. 20, displacement of the stick position and movement of the user's fingers are both directed in the same direction. "Torque" is shown as an example of the restoring force, and has a constant value depending on the spring or the like as described above, for example. "MRF torque" indicates the resistance force by the MRF. "Corrected torque" indicates a value obtained by correcting the above "torque" by the above "MRF torque". Numerical values in parentheses in arrows in FIG. 19 are the "values" of the respective torques exemplified for the purpose of facilitating understanding. In FIG. 19, as the value of the torque, the same value is used between a case where the analog stick moves from the left end to the initial position and a case where the analog stick moves from the initial position to the right end, but this value is merely an example. In actual user's operation, another variable and another element may intervene, and therefore the torque may have different values.

First, the case of FIG. 19 will be described. As shown in FIG. 19, the displacement direction of the analog stick 42 (and the user's fingers) is rightward. Therefore, the MRF torque is basically a leftward resistance force. Under this situation, first, during movement from the left end to the initial position, the torque is a rightward force, and during movement from the initial position to the right end, the torque is a leftward movement. Here, it is assumed that the viscosity of the MRF is not changed (kept constant) during the period in which the position of the analog stick 42 moves from the left end to the right end. In this case, if a correction value by the MRF torque is not adjusted, the value of the corrected torque might greatly differ. In the example of FIG. 18, without the adjustment, during movement from the left end to the initial position, the torque that is a rightward force of "3" is canceled out by the MRF torque that is a leftward force of "2", so that the corrected torque becomes a leftward force of "1". On the other hand, during movement from the initial position to the right end, the torque is a leftward force of "3", and the MRF torque that is a force of "2" having the same leftward direction is added thereto, so that the corrected torque becomes a force of "5" having the same leftward direction. That is, across the boundary at the initial position, the force greatly changes (though the direction does not change).

Accordingly, in the second example, as shown in FIG. 20, in a case where the displacement direction of the analog stick 42 is a direction of approaching the initial position, the viscosity is controlled to be greater than in a case where the displacement direction of the analog stick 42 is a direction away from the initial position. That is, the viscosity of the MRF is controlled so as to satisfy a relationship of "the viscosity during displacement toward the initial position > the viscosity during displacement away from the initial position". In the example of FIG. 20, the value of the MRF torque in the former case is "7", and the value in the latter case is "1". Thus, the corrected torque becomes a force of "4" in both the case of approaching the initial position and the case of moving away from the initial position, so that the corrected torque can be prevented from greatly differing. Through such control, the corrected torque can be made (almost) constant irrespective of the displacement direction of the analog stick 42. In the example of FIG. 20, in a case where the analog stick 42 is straightly displaced from the left end to the right end, it is possible to present almost constant torque as torque felt by the user's fingers during this period.

Here, the analog stick 42 used in the second example is configured to have the MRF units individually for the X axis and the Y axis. Therefore, it is possible to perform viscosity control individually on the X axis and the Y axis, to produce certain torque. Meanwhile, the torque (viscosity) of the analog stick 42 is basically presented as a sum of viscosities on the X axis and the Y axis, to the user. At this time, if the torques calculated on the respective axes are directly used and summed, the resultant torque might be too strong. Therefore, in the second example, in a case of producing certain torque, torque in each direction of the X axis and the Y axis is calculated in consideration of the movement direction of the analog stick 42. For example, a case where the analog stick 42 is moving in an obliquely upper right direction at 45 degrees, is assumed. Then, where a target force (of torque) is denoted by f and the movement direction is denoted by θ, torque x on the X axis is calculated as "x = fcosθ", and torque y on the Y axis is calculated as "y = fsinθ". As a result, in this case, a force (of torque) obtained by multiplying the target force (of torque) by 1/√2 is outputted on each of the X axis and the Y axis. Through such control, it becomes possible to produce more appropriate torque. Here, such control is established because a configuration in which torques are calculated individually for the X axis and the Y axis is adopted. In another example, if, for example, there is only one MRF unit (or only one element corresponding thereto), the above control is not always needed.

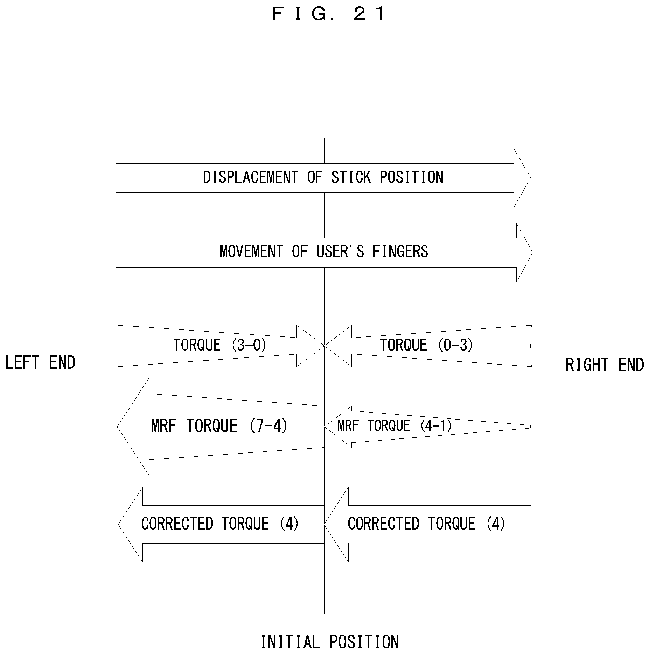

In the second example, in addition to the control focusing on the movement direction, control based on the following aspect is also performed. In a case where the restoring force imparting section is an elastic body, it is considered that the restoring force thereof becomes greater at a position farther from the initial position, and becomes smaller at a position closer to the initial position. Therefore, in the second example, in addition to the above control, control is performed so that the viscosity of the MRF becomes greater when the distance from the initial position is far than when the distance is close. In consideration of the distance from the initial position as described above, the magnitude of the viscosity of the MRF is represented by the thicknesses of arrows of the MRF torque in FIG. 21. In FIG. 21, torque becomes greater at a position farther from the initial position, and becomes smaller at a position closer to the initial position. In addition, in a range between the left end and the initial position, the MRF torque becomes greater at a position farther from the initial position. Conversely, in a range between the initial position and the right end, the MRF torque becomes greater at a position closer to the initial position. Then, by correcting the torque by a value according to the magnitude of the MRF torque which changes in accordance with the position of the analog stick 42, corrected torque is calculated so as to be constant.

Regarding a detection method for the displacement direction, for example, software means may be used such that the controller control section 41 calculates the displacement direction by comparing the present position of the analog stick with the previously detected position. Alternatively, hardware means may be used such that a predetermined sensor capable of detecting the displacement direction, e.g., a pressure sensor, is mounted to the controller 4 and the detection result is used.

Regarding correction for the restoring force parameter, in the second example, the amplitude P1 and/or the application time P3 is corrected. That is, as in the first example, with the cycle P2 remaining constant, the amplitude P1 or the application time P3 is changed to adjust the viscosity. This is because, if the cycle P2 is changed to change the viscosity, change in a feeling that the user receives might be extremely great, as described above.

Here, basically, the control shown in the second example is performed mainly by the controller 4. That is, in the control pattern B or C as shown in FIG. 14 or FIG. 15, the controller control section 41 detects the displacement direction of the stick portion 401 ((B3) in FIG. 14 or (C2) in FIG. 15). Then, on the basis of the detected direction, the controller control section 41 performs correction for the viscosity parameter sent from the application or the system software so that a constant feeling is obtained for the torque, thus controlling the viscosity of the MRF ((B4) in FIG. 14 or (C3) in FIG. 15). The reason why control is performed mainly by the controller 4 is that, in a case of performing viscosity control in consideration of the displacement direction as described above, it is considered that higher response is required in view of difference in the processing speed as described above.

As described above, the controller control section 41 stores the preset library. Therefore, at the application side or the system software side, it is possible to perform not only control of directly designating the viscosity parameter but also control of designating the preset number registered in the preset library and sending the present number to the controller control section 41. In this case, the controller control section 41 reads the viscosity parameter corresponding to the designated preset number, from the preset library, and performs correction for the viscosity parameter in accordance with the displacement direction and the restoring force as described above. Then, the viscosity of the MRF is controlled using the corrected viscosity parameter.

As described above, in the second example, control is performed in consideration of the relationship of the displacement direction of the analog stick 42 and the restoring force by the restoring force imparting section. Thus, irrespective of the displacement direction of the analog stick 42, variations in the resistance force that the user feels can be suppressed and torque that the user feels can be made almost constant.

### [Modifications]

In the first example, the example in which the MRF is applied to the analog stick 42 capable of detecting direction changes on two axes of the X axis and the Y axis (two dimensions), has been shown. Alternatively, the above configuration is also applicable to a slidable stick capable of detecting direction changes in two dimensions. In another example, the above configuration may be applied to an input device that can detect a direction change on one axis (one dimension), instead of a device that allows inputs on two axes as described above. For example, an element corresponding to the MRF unit as described above may be applied to a dial-type operation element that is rotatable about one predetermined axis. In this case, it is possible to cause an influence on ease of rotation through viscosity change, while achieving restoration to the initial position. Alternatively, the above configuration may be applied to a press-type button such as the digital button section 44 (this can be considered to be movable only in the up-down direction). Still alternatively, the above configuration may be applied to a trigger-type button. In this case, it is possible to cause an influence on ease of pressing of the button (a resistance feeling against pressing) by the viscosity of the MRF.

As another example, the above MRF may be applied to an input device that can detect direction changes on three axes X, Y, Z (three dimensions), and control as shown in the first example may be performed therefor.

In the above first example, it has been assumed that the high viscosity state is such a state that the analog stick 42 substantially is not autonomously restored to the initial position even when the fingers are taken off. In another example, the high viscosity state may be such a state that larger current than in the low viscosity state is applied, irrespective of whether or not the analog stick 42 is autonomously restored to the initial position. For example, while an autonomous initial position restoration operation can be performed in both of the high viscosity state and the low viscosity state, the speed of returning to the initial position may be different therebetween. That is, the initial position restoration speed may be made faster in the low viscosity state than in the high viscosity state.

In the above analog stick 42, the positions of the MRF units shown above are merely an example and the MRF units may be at positions other than the above ones. For example, a configuration in which the stick portion 401 directly contacts with the MRF may be adopted, or the MRF units may be provided at any positions as long as it is possible to cause an influence on ease of movement of the stick portion 401.

Regarding correction for the viscosity parameter described above, the designated viscosity parameter may be allowed to be finally corrected in the system software or the controller control section in accordance with the controller type or preference of the user. For example, control may be performed such that the designated viscosity parameter (one component thereof, e.g., amplitude) is corrected to be multiplied by 1.2. The multiplying factor for correction may be set in advance or calculated on the basis of the controller type. Alternatively, the multiplying factor for correction may be determined on the basis of the content of designation by the user.

In the above first example, the state control for the MRF is performed such that the viscosity periodically changes alternately between two viscosity states, i.e., the high viscosity state and the low viscosity state. This control may be performed using three or more viscosity states. For example, control may be performed such that the viscosity periodically changes in a predetermined order among a state A, a state B, and a state C which respectively correspond to different viscosities.

In the above description, the information processing system in which the information processing apparatus main body 2, the monitor 3, and the controller 4 are configured separately from each other has been shown. Alternatively, the above configuration and control are also applicable to apparatuses such as a hand-held information processing apparatus in which an information processing apparatus main body, a predetermined display section, and an analog stick and/or a button are integrated.

### INDUSTRIAL APPLICABILITY

The information processing system according to the present invention can provide a new operation feeling to a user, and is effectively applicable to a controller and the like used in various information processing apparatuses such as a personal computer.

### DESCRIPTION OF THE REFERENCE CHARACTERS

- 1: information processing system
- 2: information processing apparatus main body
- 3: monitor
- 4: controller
- 11: processor
- 12: storage section
- 13: controller communication section
- 14: video sound output section
- 41: controller control section
- 42: analog stick
- 44: digital button section
- 401: stick portion
- 402: X-axis drive component
- 403: Y-axis drive component
- 404: outer enclosure
- 405: X-axis variable resistor
- 406: X-axis MRF unit
- 407: Y-axis variable resistor
- 408: Y-axis MRF unit

## Claims

1. An information processing system comprising:
an information processing apparatus (2) configured to execute an application; and
a controller (4) including
a stick (42, 401) configured to be displaced from an initial position by a user's operation,
a restoring force imparting section (402, 403) configured to apply a restoring force for returning a position of the displaced stick to the initial position,
a resistance section (406, 408) using a magnetorheological fluid whose viscosity changes in accordance with an intensity of a magnetic field and which serves as a resistance when the stick is displaced from the initial position and to the initial position, and
a magnetic field generation section (422) configured to provide the magnetic field to the magnetorheological fluid; and
a circuit (11, 41) configured to control the magnetic field generation section the system being **characterised in that** the circuit is further configured to detect a displacement direction of the stick (42, 401),
when the stick is displaced from a left end to a right end of a movable range of the stick, the circuit being further configured to change the intensity of the magnetic field such that, when a displacement direction of the stick is a direction of approaching the initial position, the viscosity is greater than when the displacement direction is a direction of moving away from the initial position.

2. The information processing system according to claim 1, wherein
the circuit is configured to change the viscosity of the magnetorheological fluid by controlling an amplitude, a frequency, and an application time of current to be applied to the magnetic field generation section, and
when the displacement direction is a direction of approaching the initial position, the circuit is configured to make the amplitude or the application time greater than when the displacement direction is a direction of moving away from the initial position.

3. The information processing system according to claim 2, wherein
the restoring force imparting section is configured such that, as a position of the stick becomes farther from the initial position, the restoring force becomes greater, and
when the displacement direction of the stick is a direction of moving away from the initial position, the circuit is configured to make the amplitude or the application time smaller as the position of the stick becomes farther from the initial position.

4. The information processing system according to claim 2 or 3, wherein
among the amplitude, the frequency, and the application time, the circuit is configured to change the amplitude and/or the application time without changing the frequency, to change the viscosity.

5. The information processing system according to claim 4, wherein
the circuit is configured to increase the amplitude, and keeps the application time constant or reduces the application time, to change the viscosity so as to increase.

6. The information processing system according to any one of claims 1 to 5, wherein
the controller further includes a direction detection section configured to detect the displacement direction of the stick, and
the circuit changes the intensity of the magnetic field on the basis of the displacement direction detected by the direction detection section.

7. The information processing system according to claim 6, wherein
on the basis of the displacement direction, the controller is configured to correct a viscosity parameter which is outputted from system software for controlling the information processing system or the application operating on the information processing system and which designates a state of the viscosity of the magnetorheological fluid, and
the controller is configured to change the intensity of the magnetic field on the basis of the corrected viscosity parameter.

8. The information processing system according to claim 6, wherein
the controller further includes a library storage section storing a preset library in which a plurality of presets of information indicating viscosities for realizing predetermined viscosity states are allowed to be included,
on the basis of information which is outputted from system software for controlling the information processing system or the application operating on the information processing system and which designates any of the presets, the controller is configured to acquire, from the preset library, information indicating a predetermined viscosity corresponding to the designated preset, and
the controller is configured to correct the acquired information on the basis of the detected displacement direction, and changes the intensity of the magnetic field on the basis of the corrected viscosity parameter.

9. A controller comprising:
a stick (42, 401) configured to be displaced from an initial position by a user's operation;
a restoring force imparting section (402, 403) configured to apply a restoring force for returning a position of the displaced stick to the initial position;
a resistance section (406, 408) using a magnetorheological fluid whose viscosity changes in accordance with an intensity of a magnetic field and which serves as a resistance when the stick is displaced from the initial position and to the initial position;
a magnetic field generation section (422) configured to provide the magnetic field to the magnetorheological fluid;
a direction detection section configured to detect the displacement direction of the stick (42, 401); and
a circuit (41) being configured to control the magnetic field generation section,
when the stick is displaced from a left end to a right end of a movable range of the stick, the circuit being configured to change the intensity of the magnetic field such that, when a displacement direction of the stick is a direction of approaching the initial position, the viscosity is greater than when the displacement direction is a direction of moving away from the initial position.

10. An information processing method for controlling an information processing system comprising:
an information processing apparatus (2) configured to execute an application; and
a controller including
a stick (42, 401) configured to be displaced from an initial position by a user's operation,
a restoring force imparting section (402, 403) configured to apply a restoring force for returning a position of the displaced stick to the initial position,
a resistance section (406, 408) using a magnetorheological fluid whose viscosity changes in accordance with an intensity of a magnetic field and which serves as a resistance when the stick is displaced from the initial position and to the initial position, and
a magnetic field generation section (422) configured to provide the magnetic field to the magnetorheological fluid; and
a circuit (11, 41) configured to control the magnetic field generation section and to detect a displacement direction of the stick (42, 401),
when the stick is displaced from a left end to a right end of a movable range of the stick, the information processing method causing the circuit to change the intensity of the magnetic field such that, when a displacement direction of the stick is a direction of approaching the initial position, the viscosity is greater than when the displacement direction is a direction of moving away from the initial position.

11. An information processing program to be executed by a computer (11) of an information processing system (1) comprising:
an information processing apparatus (2) configured to execute an application; and
a controller including
a stick (42, 401) configured to be displaced from an initial position by a user's operation,
a restoring force imparting section (402, 403) configured to apply a restoring force for returning a position of the displaced stick to the initial position,
a resistance section (406, 408) using a magnetorheological fluid whose viscosity changes in accordance with an intensity of a magnetic field and which serves as a resistance when the stick is displaced from the initial position and to the initial position, and
a magnetic field generation section (422) configured to provide the magnetic field to the magnetorheological fluid; and
a circuit (11, 41) configured to control the magnetic field generation section and to detect a displacement direction of the stick (42, 401),
when the stick is displaced from a left end to a right end of a movable range of the stick, the information processing program causing the computer to change the intensity of the magnetic field such that, when a displacement direction of the stick is a direction of approaching the initial position, the viscosity is greater than when the displacement direction is a direction of moving away from the initial position.

## Patentansprüche

1. Informationsverarbeitungssystem, umfassend:
eine Informationsverarbeitungsvorrichtung (2), die dazu eingerichtet ist, eine Anwendung auszuführen; und
eine Steuerung (4), umfassend
einen Stick (42, 401), der dazu eingerichtet ist, durch eine Betätigung eines Benutzers aus einer Ausgangsposition ausgelenkt zu werden,
einen Rückstellkraft-Aufbringungsabschnitt (402, 403), der dazu eingerichtet ist, eine Rückstellkraft zum Zurückführen einer Position des ausgelenkten Sticks in die Ausgangsposition aufzubringen,
einen Widerstandsabschnitt (406, 408), der ein magnetorheologisches Fluid verwendet, dessen Viskosität sich entsprechend einer Intensität eines Magnetfeldes ändert und das als Widerstand dient, wenn der Stick aus der Ausgangsposition und in die Ausgangsposition ausgelenkt wird, und
einen Magnetfelderzeugungsabschnitt (422), der dazu eingerichtet ist, das Magnetfeld dem magnetorheologischen Fluid bereitzustellen; und
eine Schaltung (11, 41), die dazu eingerichtet ist, den Magnetfelderzeugungsabschnitt zu steuern,
wobei das System **dadurch gekennzeichnet ist, dass** die Schaltung ferner dazu eingerichtet ist, eine Auslenkungsrichtung des Sticks (42, 401) zu erfassen,
wobei, wenn der Stick von einem linken Ende zu einem rechten Ende eines Bewegungsbereichs des Sticks ausgelenkt wird, die Schaltung ferner dazu eingerichtet ist, die Intensität des Magnetfeldes derart zu ändern, dass, wenn eine Auslenkungsrichtung des Sticks eine Richtung der Annäherung an die Ausgangsposition ist, die Viskosität größer ist als dann, wenn die Auslenkungsrichtung eine Richtung der Entfernung von der Ausgangsposition ist.

2. Informationsverarbeitungssystem nach Anspruch 1, wobei
die Schaltung dazu eingerichtet ist, die Viskosität des magnetorheologischen Fluids durch Steuern einer Amplitude, einer Frequenz und einer Anwendungszeit eines Stroms zu ändern, der an den Magnetfelderzeugungsabschnitt anzulegen ist, und
wenn die Auslenkungsrichtung eine Richtung der Annäherung an die Ausgangsposition ist, die Schaltung dazu eingerichtet ist, die Amplitude oder die Anwendungszeit größer zu machen als dann, wenn die Auslenkungsrichtung eine Richtung der Entfernung von der Ausgangsposition ist.

3. Informationsverarbeitungssystem nach Anspruch 2, wobei
der Rückstellkraft-Aufbringungsabschnitt derart eingerichtet ist, dass, je weiter eine Position des Sticks von der Ausgangsposition entfernt ist, die Rückstellkraft größer wird, und
wenn die Auslenkungsrichtung des Sticks eine Richtung der Entfernung von der Ausgangsposition ist, die Schaltung dazu eingerichtet ist, die Amplitude oder die Anwendungszeit kleiner zu machen, je weiter die Position des Sticks von der Ausgangsposition entfernt ist.

4. Informationsverarbeitungssystem nach Anspruch 2 oder 3, wobei die Schaltung dazu eingerichtet ist, unter der Amplitude, der Frequenz und der Anwendungszeit die Amplitude und/oder die Anwendungszeit zu ändern, ohne die Frequenz zu ändern, um die Viskosität zu ändern.

5. Informationsverarbeitungssystem nach Anspruch 4, wobei
die Schaltung dazu eingerichtet ist, die Amplitude zu erhöhen und die Anwendungszeit konstant zu halten oder die Anwendungszeit zu verringern, um die Viskosität so zu ändern, dass sie zunimmt.

6. Informationsverarbeitungssystem nach einem der Ansprüche 1 bis 5, wobei
die Steuerung ferner einen Richtungserfassungsabschnitt umfasst, der dazu eingerichtet ist, die Auslenkungsrichtung des Sticks zu erfassen, und
die Schaltung die Intensität des Magnetfeldes auf Grundlage der durch den Richtungserfassungsabschnitt erfassten Auslenkungsrichtung ändert.

7. Informationsverarbeitungssystem nach Anspruch 6, wobei
die Steuerung auf Grundlage der Auslenkungsrichtung dazu eingerichtet ist, einen Viskositätsparameter zu korrigieren, der von Systemsoftware zum Steuern des Informationsverarbeitungssystems oder von der auf dem Informationsverarbeitungssystem betriebenen Anwendung ausgegeben wird und der einen Zustand der Viskosität des magnetorheologischen Fluids bezeichnet, und
die Steuerung dazu eingerichtet ist, die Intensität des Magnetfeldes auf Grundlage des korrigierten Viskositätsparameters zu ändern.

8. Informationsverarbeitungssystem nach Anspruch 6, wobei
die Steuerung ferner einen Bibliotheksspeicherabschnitt umfasst, der eine Vorgabebibliothek speichert, in der mehrere Vorgaben von Informationen, die Viskositäten zum Realisieren vorbestimmter Viskositätszustände angeben, enthalten sein können,
die Steuerung auf Grundlage von Informationen, die von Systemsoftware zum Steuern des Informationsverarbeitungssystems oder von der auf dem Informationsverarbeitungssystem betriebenen Anwendung ausgegeben werden und eine der Vorgaben bezeichnen, dazu eingerichtet ist, aus der Vorgabebibliothek Informationen zu erfassen, die eine vorbestimmte Viskosität entsprechend der bezeichneten Vorgabe angeben, und
die Steuerung dazu eingerichtet ist, die erfassten Informationen auf Grundlage der erfassten Auslenkungsrichtung zu korrigieren und die Intensität des Magnetfeldes auf Grundlage des korrigierten Viskositätsparameters zu ändern.

9. Steuerung, umfassend:
einen Stick (42, 401), der dazu eingerichtet ist, durch eine Betätigung eines Benutzers aus einer Ausgangsposition ausgelenkt zu werden;
einen Rückstellkraft-Aufbringungsabschnitt (402, 403), der dazu eingerichtet ist, eine Rückstellkraft zum Zurückführen einer Position des ausgelenkten Sticks in die Ausgangsposition aufzubringen;
einen Widerstandsabschnitt (406, 408), der ein magnetorheologisches Fluid verwendet, dessen Viskosität sich entsprechend einer Intensität eines Magnetfeldes ändert und das als Widerstand dient, wenn der Stick aus der Ausgangsposition und in die Ausgangsposition ausgelenkt wird;
einen Magnetfelderzeugungsabschnitt (422), der dazu eingerichtet ist, das Magnetfeld dem magnetorheologischen Fluid bereitzustellen;
einen Richtungserfassungsabschnitt, der dazu eingerichtet ist, die Auslenkungsrichtung des Sticks (42, 401) zu erfassen; und
eine Schaltung (41), die dazu eingerichtet ist, den Magnetfelderzeugungsabschnitt zu steuern, wobei, wenn der Stick von einem linken Ende zu einem rechten Ende eines Bewegungsbereichs des Sticks ausgelenkt wird, die Schaltung dazu eingerichtet ist, die Intensität des Magnetfeldes derart zu ändern, dass, wenn eine Auslenkungsrichtung des Sticks eine Richtung der Annäherung an die Ausgangsposition ist, die Viskosität größer ist als dann, wenn die Auslenkungsrichtung eine Richtung der Entfernung von der Ausgangsposition ist.

10. Informationsverarbeitungsverfahren zum Steuern eines Informationsverarbeitungssystems, umfassend:
eine Informationsverarbeitungsvorrichtung (2), die dazu eingerichtet ist, eine Anwendung auszuführen; und
eine Steuerung, umfassend
einen Stick (42, 401), der dazu eingerichtet ist, durch eine Betätigung eines Benutzers aus einer Ausgangsposition ausgelenkt zu werden,
einen Rückstellkraft-Aufbringungsabschnitt (402, 403), der dazu eingerichtet ist, eine Rückstellkraft zum Zurückführen einer Position des ausgelenkten Sticks in die Ausgangsposition aufzubringen,
einen Widerstandsabschnitt (406, 408), der ein magnetorheologisches Fluid verwendet, dessen Viskosität sich entsprechend einer Intensität eines Magnetfeldes ändert und das als Widerstand dient, wenn der Stick aus der Ausgangsposition und in die Ausgangsposition ausgelenkt wird, und
einen Magnetfelderzeugungsabschnitt (422), der dazu eingerichtet ist, das Magnetfeld dem magnetorheologischen Fluid bereitzustellen; und
eine Schaltung (11, 41), die dazu eingerichtet ist, den Magnetfelderzeugungsabschnitt zu steuern und eine Auslenkungsrichtung des Sticks (42, 401) zu erfassen,
wobei, wenn der Stick von einem linken Ende zu einem rechten Ende eines Bewegungsbereichs des Sticks ausgelenkt wird, das Informationsverarbeitungsverfahren die Schaltung veranlasst, die Intensität des Magnetfeldes derart zu ändern, dass, wenn eine Auslenkungsrichtung des Sticks eine Richtung der Annäherung an die Ausgangsposition ist, die Viskosität größer ist als dann, wenn die Auslenkungsrichtung eine Richtung der Entfernung von der Ausgangsposition ist.

11. Informationsverarbeitungsprogramm, das von einem Computer (11) eines Informationsverarbeitungssystems (1) auszuführen ist, umfassend:
eine Informationsverarbeitungsvorrichtung (2), die dazu eingerichtet ist, eine Anwendung auszuführen; und
eine Steuerung, umfassend
einen Stick (42, 401), der dazu eingerichtet ist, durch eine Betätigung eines Benutzers aus einer Ausgangsposition ausgelenkt zu werden,
einen Rückstellkraft-Aufbringungsabschnitt (402, 403), der dazu eingerichtet ist, eine Rückstellkraft zum Zurückführen einer Position des ausgelenkten Sticks in die Ausgangsposition aufzubringen,
einen Widerstandsabschnitt (406, 408), der ein magnetorheologisches Fluid verwendet, dessen Viskosität sich entsprechend einer Intensität eines Magnetfeldes ändert und das als Widerstand dient, wenn der Stick aus der Ausgangsposition und in die Ausgangsposition ausgelenkt wird, und
einen Magnetfelderzeugungsabschnitt (422), der dazu eingerichtet ist, das Magnetfeld dem magnetorheologischen Fluid bereitzustellen; und
eine Schaltung (11, 41), die dazu eingerichtet ist, den Magnetfelderzeugungsabschnitt zu steuern und eine Auslenkungsrichtung des Sticks (42, 401) zu erfassen,
wobei, wenn der Stick von einem linken Ende zu einem rechten Ende eines Bewegungsbereichs des Sticks ausgelenkt wird, das Informationsverarbeitungsprogramm den Computer veranlasst, die Intensität des Magnetfeldes derart zu ändern, dass, wenn eine Auslenkungsrichtung des Sticks eine Richtung der Annäherung an die Ausgangsposition ist, die Viskosität größer ist als dann, wenn die Auslenkungsrichtung eine Richtung der Entfernung von der Ausgangsposition ist.

## Revendications

1. Système de traitement d'informations comprenant :
un appareil de traitement d'informations (2) configuré pour exécuter une application ; et
une manette (4) comprenant
un stick (42, 401) configuré pour être déplacé depuis une position initiale par une opération d'un utilisateur,
une section d'application de force de rappel (402, 403) configurée pour appliquer une force de rappel destinée à ramener une position du stick déplacé à la position initiale,
une section de résistance (406, 408) utilisant un fluide magnétorhéologique dont la viscosité change en fonction d'une intensité d'un champ magnétique et qui sert de résistance lorsque le stick est déplacé depuis la position initiale et vers la position initiale, et
une section de génération de champ magnétique (422) configurée pour fournir le champ magnétique au fluide magnétorhéologique ; et
un circuit (11, 41) configuré pour commander la section de génération de champ magnétique,
le système étant **caractérisé en ce que** le circuit est en outre configuré pour détecter une direction de déplacement du stick (42, 401),
lorsque le stick est déplacé d'une extrémité gauche à une extrémité droite d'une plage mobile du stick, le circuit étant en outre configuré pour modifier l'intensité du champ magnétique de telle sorte que, lorsqu'une direction de déplacement du stick est une direction d'approche de la position initiale, la viscosité soit supérieure à celle lorsque la direction de déplacement est une direction d'éloignement de la position initiale.

2. Système de traitement d'informations selon la revendication 1, dans lequel
le circuit est configuré pour modifier la viscosité du fluide magnétorhéologique en commandant une amplitude, une fréquence et un temps d'application d'un courant à appliquer à la section de génération de champ magnétique, et
lorsque la direction de déplacement est une direction d'approche de la position initiale, le circuit est configuré pour rendre l'amplitude ou le temps d'application supérieur à celui lorsque la direction de déplacement est une direction d'éloignement de la position initiale.

3. Système de traitement d'informations selon la revendication 2, dans lequel
la section d'application de force de rappel est configurée de telle sorte que, à mesure qu'une position du stick s'éloigne de la position initiale, la force de rappel devient plus grande, et
lorsque la direction de déplacement du stick est une direction d'éloignement de la position initiale, le circuit est configuré pour rendre l'amplitude ou le temps d'application plus petit à mesure que la position du stick s'éloigne de la position initiale.

4. Système de traitement d'informations selon la revendication 2 ou 3, dans lequel, parmi l'amplitude, la fréquence et le temps d'application, le circuit est configuré pour modifier l'amplitude et/ou le temps d'application sans modifier la fréquence, afin de modifier la viscosité.

5. Système de traitement d'informations selon la revendication 4, dans lequel
le circuit est configuré pour augmenter l'amplitude, et maintient le temps d'application constant ou réduit le temps d'application, afin de modifier la viscosité de manière à l'augmenter.

6. Système de traitement d'informations selon l'une quelconque des revendications 1 à 5, dans lequel
la manette comprend en outre une section de détection de direction configurée pour détecter la direction de déplacement du stick, et
le circuit modifie l'intensité du champ magnétique sur la base de la direction de déplacement détectée par la section de détection de direction.

7. Système de traitement d'informations selon la revendication 6, dans lequel
sur la base de la direction de déplacement, la manette est configurée pour corriger un paramètre de viscosité qui est émis par un logiciel système pour commander le système de traitement d'informations ou par l'application fonctionnant sur le système de traitement d'informations et qui désigne un état de la viscosité du fluide magnétorhéologique, et
la manette est configurée pour modifier l'intensité du champ magnétique sur la base du paramètre de viscosité corrigé.

8. Système de traitement d'informations selon la revendication 6, dans lequel
la manette comprend en outre une section de stockage de bibliothèque stockant une bibliothèque de préréglages dans laquelle une pluralité de préréglages d'informations indiquant des viscosités pour réaliser des états de viscosité prédéterminés peuvent être inclus,
sur la base d'informations qui sont émises par un logiciel système pour commander le système de traitement d'informations ou par l'application fonctionnant sur le système de traitement d'informations et qui désignent l'un quelconque des préréglages, la manette est configurée pour acquérir, à partir de la bibliothèque de préréglages, des informations indiquant une viscosité prédéterminée correspondant au préréglage désigné, et
la manette est configurée pour corriger les informations acquises sur la base de la direction de déplacement détectée, et modifie l'intensité du champ magnétique sur la base du paramètre de viscosité corrigé.

9. Manette comprenant :
un stick (42, 401) configuré pour être déplacé depuis une position initiale par une opération d'un utilisateur ;
une section d'application de force de rappel (402, 403) configurée pour appliquer une force de rappel destinée à ramener une position du stick déplacé à la position initiale ;
une section de résistance (406, 408) utilisant un fluide magnétorhéologique dont la viscosité change en fonction d'une intensité d'un champ magnétique et qui sert de résistance lorsque le stick est déplacé depuis la position initiale et vers la position initiale ;
une section de génération de champ magnétique (422) configurée pour fournir le champ magnétique au fluide magnétorhéologique ;
une section de détection de direction configurée pour détecter la direction de déplacement du stick (42, 401) ; et
un circuit (41) configuré pour commander la section de génération de champ magnétique, lorsque le stick est déplacé d'une extrémité gauche à une extrémité droite d'une plage mobile du stick, le circuit étant configuré pour modifier l'intensité du champ magnétique de telle sorte que, lorsqu'une direction de déplacement du stick est une direction d'approche de la position initiale, la viscosité soit supérieure à celle lorsque la direction de déplacement est une direction d'éloignement de la position initiale.

10. Procédé de traitement d'informations pour commander un système de traitement d'informations comprenant :
un appareil de traitement d'informations (2) configuré pour exécuter une application ; et
une manette comprenant
un stick (42, 401) configuré pour être déplacé depuis une position initiale par une opération d'un utilisateur,
une section d'application de force de rappel (402, 403) configurée pour appliquer une force de rappel destinée à ramener une position du stick déplacé à la position initiale,
une section de résistance (406, 408) utilisant un fluide magnétorhéologique dont la viscosité change en fonction d'une intensité d'un champ magnétique et qui sert de résistance lorsque le stick est déplacé depuis la position initiale et vers la position initiale, et
une section de génération de champ magnétique (422) configurée pour fournir le champ magnétique au fluide magnétorhéologique ; et
un circuit (11, 41) configuré pour commander la section de génération de champ magnétique et pour détecter une direction de déplacement du stick (42, 401),
lorsque le stick est déplacé d'une extrémité gauche à une extrémité droite d'une plage mobile du stick, le procédé de traitement d'informations amenant le circuit à modifier l'intensité du champ magnétique de telle sorte que, lorsqu'une direction de déplacement du stick est une direction d'approche de la position initiale, la viscosité soit supérieure à celle lorsque la direction de déplacement est une direction d'éloignement de la position initiale.

11. Programme de traitement d'informations devant être exécuté par un ordinateur (11) d'un système de traitement d'informations (1) comprenant :
un appareil de traitement d'informations (2) configuré pour exécuter une application ; et
une manette comprenant
un stick (42, 401) configuré pour être déplacé depuis une position initiale par une opération d'un utilisateur,
une section d'application de force de rappel (402, 403) configurée pour appliquer une force de rappel destinée à ramener une position du stick déplacé à la position initiale,
une section de résistance (406, 408) utilisant un fluide magnétorhéologique dont la viscosité change en fonction d'une intensité d'un champ magnétique et qui sert de résistance lorsque le stick est déplacé depuis la position initiale et vers la position initiale, et
une section de génération de champ magnétique (422) configurée pour fournir le champ magnétique au fluide magnétorhéologique ; et
un circuit (11, 41) configuré pour commander la section de génération de champ magnétique et pour détecter une direction de déplacement du stick (42, 401),
lorsque le stick est déplacé d'une extrémité gauche à une extrémité droite d'une plage mobile du stick, le programme de traitement d'informations amenant l'ordinateur à modifier l'intensité du champ magnétique de telle sorte que, lorsqu'une direction de déplacement du stick est une direction d'approche de la position initiale, la viscosité soit supérieure à celle lorsque la direction de déplacement est une direction d'éloignement de la position initiale.
